# EUROPEAN PATENT APPLICATION

(11) **EP 4 060 303 A1**
(43) Date of publication of application: **21.09.2022**
(21) Application number: 22161441.5
(22) Date of filing: 10.03.2022
(51) Int. Cl.: G01L 1/22, G01L 5/1627, G01L 5/162

(54) **SENSOR CHIP AND FORCE SENSOR APPARATUS**

(30) Priority: 16.03.2021 JP 2021042135
(71) Applicant: Minebea Mitsumi Inc., Kitasaku-gun, Nagano 3890293 (JP)
(72) Inventor: YAMAGUCHI, Shinya, TAMA-SHI, 206-8567 (JP)
(74) Representative: Regimbeau

(57) **Abstract**

A sensor chip for detecting, with respect to multiple axes, a force or a moment in a predetermined axial direction, based on a change in outputs of strain detection elements includes a plurality of first support portions, wherein a plurality of amplifiers configured to amplify the outputs of the strain detection elements of respective axes are provided in the plurality of first support portions and integrally formed with the first support portion.

## Description

### BACKGROUND

### 1. Field of the Invention

The present disclosure relates to a sensor chip and a force sensor apparatus.

### 2. Description of the Related Art

Conventionally, a force sensor apparatus that detects displacement in a predetermined axial direction is known. For example, Patent Document 1 discloses a force sensor apparatus that includes: a sensor chip; and a structure body including an external force application plate provided around the sensor chip to receive an external force, a support portion supporting the sensor chip, an external force buffer mechanism fixing the external force application plate to the support portion, and a connection rod that is an external force transmission mechanism, wherein the external force application plate and an action unit are connected by a connection rod.

For example, the sensor chip includes the action unit to which an external force is applied, a support portion fixed to an outside, and a coupling portion connected to the action unit and the support portion, and a resistance element for detecting the amount of strain corresponding to applied external force by piezoelectric effect is provided on the surface of the action unit or the coupling portion.

In general, in a sensor chip used for a force sensor apparatus, there is a tradeoff relationship such that when the load limit is improved, the sensitivity (the output) decreases. Therefore, it is difficult to implement a sensor chip that achieves both of the load limit and the sensitivity.

### RELATED-ART DOCUMENTS

### PATENT DOCUMENT

Patent Document 1: Japanese Patent Laid-Open No. 2003-207405

### SUMMARY

The present disclosure has been made in view of the above issues, and it is an object of the present disclosure to provide a sensor chip that achieves both of the load limit and the sensitivity.

An aspect of an embodiment of the present disclosure provides a sensor chip (100) for detecting, with respect to multiple axes, a force or a moment in a predetermined axial direction, based on a change in outputs of strain detection elements (FxR1 and the like), the sensor chip (100) including a plurality of first support portions (101 to 104), wherein a plurality of amplifiers (Fx_AMP and the like) configured to amplify the outputs of the strain detection elements (FxR1 and the like) of respective axes are provided in the plurality of first support portions (101 to 104) and integrally formed with the plurality of first support portions (101 to 104).

The reference numerals in parentheses above are provided for ease of understanding, and are merely examples. The present disclosure is not limited to the aspect illustrated in the drawings.

According to an aspect of an embodiment of the present disclosure, a sensor chip that achieves both of the load limit and the sensitivity can be provided.

### BRIEF DESCRIPTION OF THE DRAWINGS

Fig. 1 is a perspective view illustrating an example of a force sensor apparatus according to a first embodiment;
Fig. 2 is a cross-sectional perspective view illustrating an example of the force sensor apparatus according to the first embodiment;
Fig. 3 is an upper surface-side perspective view illustrating a state in which a sensor chip is attached to an input transmission unit;
Fig. 4 is a lower surface-side perspective view illustrating a state in which the sensor chip is attached to the input transmission unit;
Fig. 5 is a perspective view illustrating a sensor chip 100 as seen from the upper side in the Z-axis direction;
Fig. 6 is a plan view illustrating the sensor chip 100 as seen from the upper side in the Z-axis direction;
Fig. 7 is a perspective view illustrating the sensor chip 100 as seen from the lower side in the Z-axis direction;
Fig. 8 is a bottom view illustrating the sensor chip 100 as seen from the lower side in the Z-axis direction;
Fig. 9 is a drawing for explaining reference symbols indicating the force and the moment applied to each axis;
Fig. 10 is a drawing illustrating an example of an arrangement of piezo resistance elements of the sensor chip 100;
Fig. 11 is a partially enlarged view of one detection block of the sensor chip as illustrated in Fig. 10;
Fig. 12 is a drawing (Part 1) illustrating an example of a detection circuit using piezo resistance elements;
Fig. 13 is a drawing (Part 2) illustrating an example of a detection circuit using the piezo resistance elements;
Fig. 14 is a drawing for explaining Fx input;
Fig. 15 is a drawing for explaining Fy input;
Fig. 16 is a perspective view illustrating an example of a force-receiving plate constituting a strain body 200;
Fig. 17 is a perspective view illustrating an example of a strain unit constituting the strain body 200;
Fig. 18 is a perspective view of an upper surface-side illustrating an example of an input transmission unit constituting the strain body 200;
Fig. 19 is a perspective view of a lower surface-side illustrating the example of the input transmission unit constituting the strain body 200;
Fig. 20 is a side view illustrating an example of the input transmission unit constituting the strain body 200;
Fig. 21 is a perspective view illustrating an example of a lid plate constituting the strain body 200;
Fig. 22 is a plan view for explaining an arrangement of amplifiers in the sensor chip 100;
Fig. 23 is a plan view schematically illustrating wires connected to the piezo resistance elements and the amplifiers;
Fig. 24 is a drawing illustrating connections between the amplifiers;
Fig. 25 is a cross-sectional view illustrating an example of transistors constituting each amplifier; and Fig. 26 is a plan view for explaining an arrangement of amplifiers and AD convertors in a sensor chip 100A.

### DESCRIPTION OF THE EMBODIMENTS

Hereinafter, an embodiment will be described with reference to the drawings. In the drawings, the same components are denoted with the same numerals and duplicate descriptions about the same components may be omitted.

### <First embodiment>

### (Schematic configuration of force sensor apparatus 1)

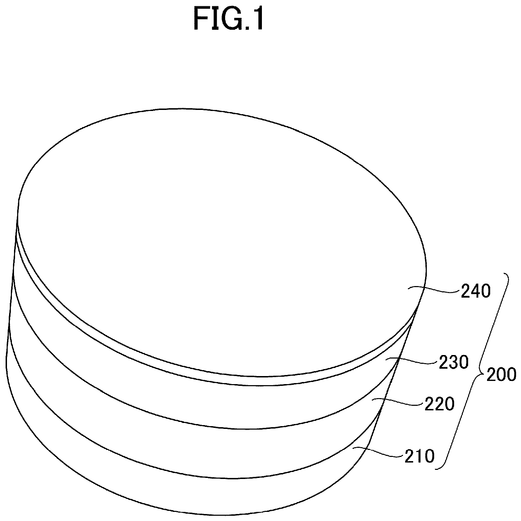

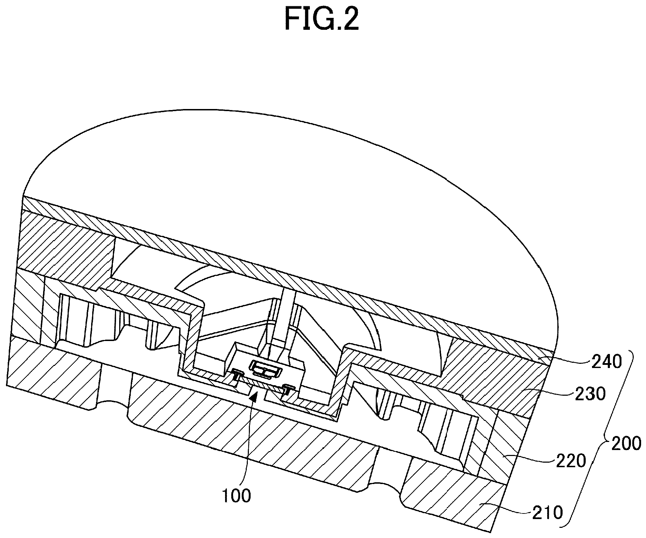

Fig. 1 is a perspective view illustrating an example of a force sensor apparatus 1 according to the first embodiment. Fig. 2 is a cross-sectional perspective view illustrating an example of the force sensor apparatus according 1 to the first embodiment. As illustrated in Fig. 1 and Fig. 2, the force sensor apparatus 1 includes a sensor chip 100 and a strain body 200. For example, the force sensor apparatus 1 is a multi-axis force sensor apparatus mounted on an arm or a finger of a robot used in a machine tool or the like.

The sensor chip 100 has a function of detecting displacement in a predetermined axial direction with respect to up to six axes. The strain body 200 has a function of transmitting the force or the moment applied, or both of the force and the moment, to the sensor chip 100. For example, in the following embodiments, the sensor chip 100 performs detection with respect to six axes. However, the embodiment is not limited thereto. The embodiment may also be applicable to the case where the sensor chip 100 performs detection with respect to three axes.

The strain body 200 includes a force-receiving plate 210, a strain unit 220, an input transmission unit 230, and a lid plate 240. The strain unit 220 is laminated on the force-receiving plate 210, the input transmission unit 230 is laminated on the strain unit 220, and the lid plate 240 is laminated on the input transmission unit 230. Overall, the strain body 200 is formed in a substantially cylindrical. The functions of the strain body 200 are mainly achieved by the strain unit 220 and the input transmission unit 230. Therefore, the force-receiving plate 210 and the lid plate 240 are provided as necessary.

In the present embodiment, for the sake of convenience, with respect to the force sensor apparatus 1, a side of the lid plate 240 is referred to as an upper side or one of the sides, and a side of the force-receiving plate 210 is referred to as a lower side or the other of the sides. With respect to each component, a surfaces on the side of the lid plate 240 is referred to as one of the surfaces or an upper surface, and a surfaces on the side of the force-receiving plate 210 is referred to as the other of the surfaces or a lower surface. However, the force sensor apparatus 1 can be used upside down, or can be arranged at any given angle. A plan view means viewing a target object in a direction normal to the upper surface of the lid plate 240 (a Z-axis direction). A planar shape means a shape of a target object in the direction normal to the upper surface of the lid plate 240 (the Z-axis direction).

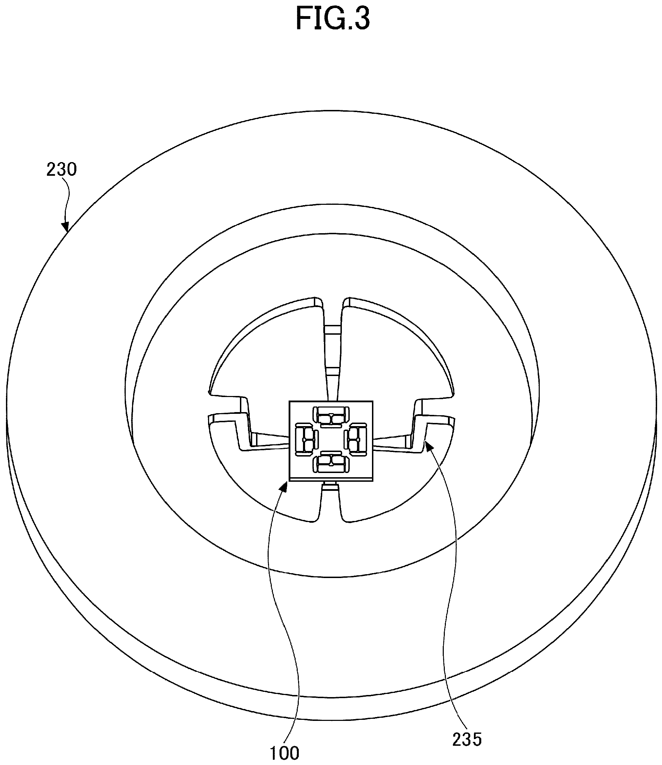

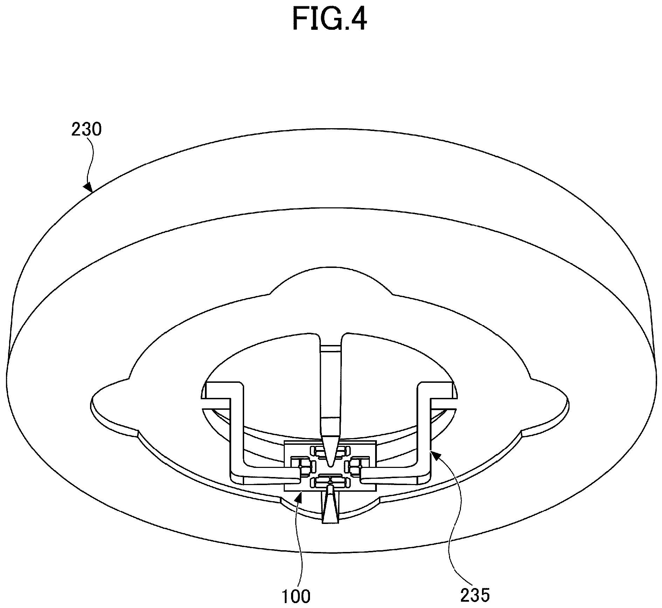

Fig. 3 is an upper surface-side perspective view illustrating a state in which the sensor chip is attached to the input transmission unit. Fig. 4 is a lower surface-side perspective view illustrating a state in which the sensor chip is attached to the input transmission unit. As illustrated in Fig. 3 and Fig. 4, the input transmission unit 230 is provided with a containment portion 235 that protrudes from the lower surface of the input transmission unit 230 to the strain unit 220. The sensor chip 100 is fixed to the containment portion 235 on the side of the lid plate 240.

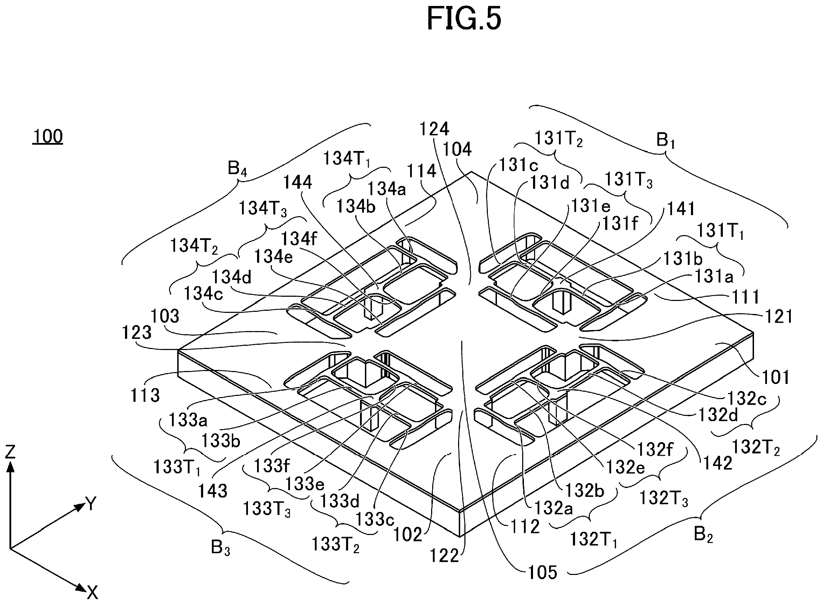

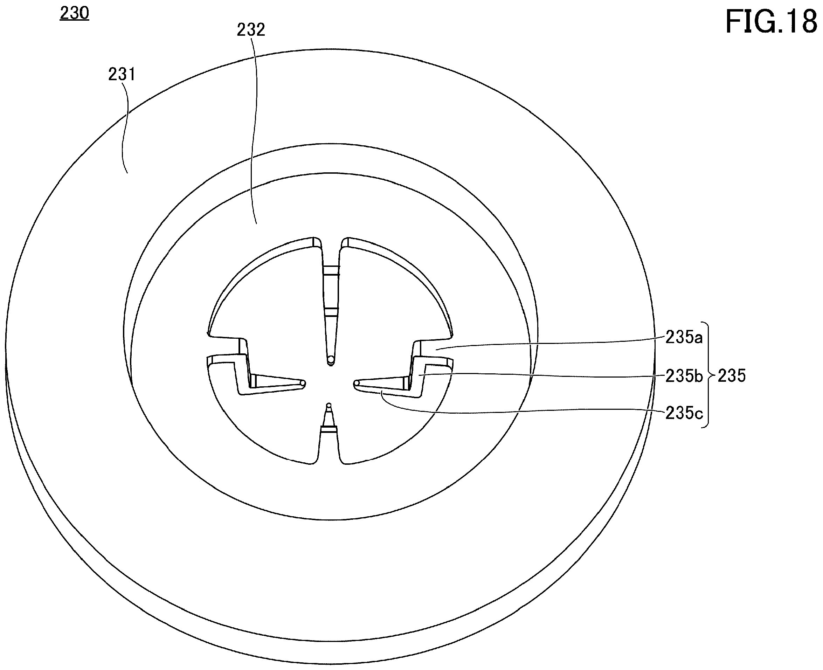

Specifically, as explained later, four sensor connection portions 235c (see Fig. 18 to Fig. 20 and the like explained later) are provided on the containment portion 235 on the side of the strain unit 220. The sensor connection portions 235c are connected to force application points 151 to 154 (see Fig. 5 to Fig. 8 explained later) on the lower surface of the sensor chip 100.

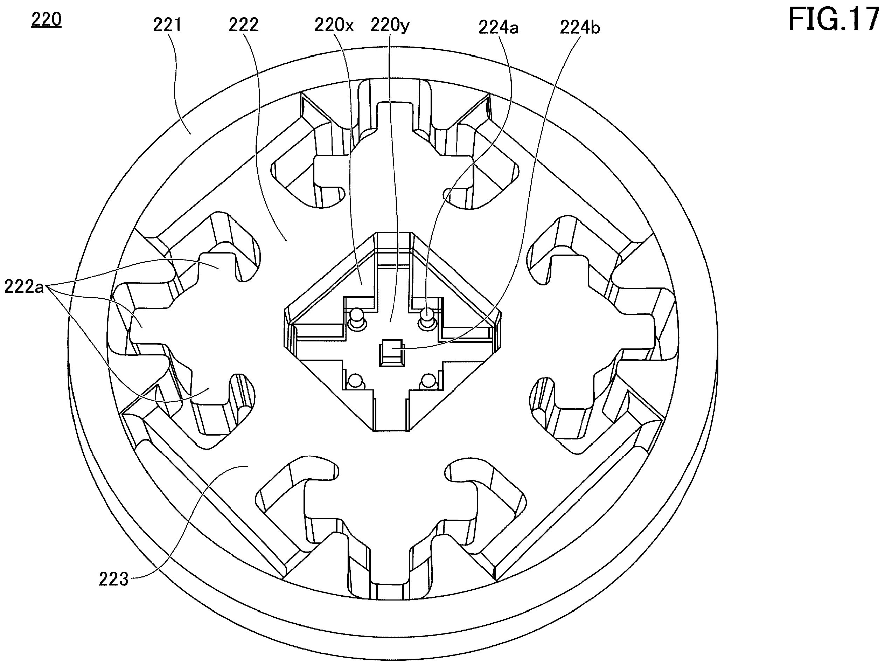

The containment portion 235 extends to the strain unit 220. As explained later, five pillar-shaped connection portions including first connection portions 224a and a second connection portion 224b (see Fig. 17 and the like explained later) that protrude toward the input transmission unit 230 are provided on the strain unit 220. The first connection portion 224a is connected to support portions 101 to 104 of the sensor chip 100, and the second connection portion 224b is connected to a support portion 105 of the sensor chip 100.

Hereinafter, the sensor chip 100 and the strain body 200 are explained in detail. In the following explanation, it is assumed that a term "parallel" is meant to include a case where two straight lines, sides, and the like are in the range of 0 degrees ± 10 degrees. Also, it is assumed that a term "vertical" or "orthogonal" is meant to include a case where two straight lines, sides, and the like are in the range of 90 degrees ± 10 degrees. However, this does not apply if a specific explanation is given for a particular case. Also, it is assumed that a term "center" means an approximate center of a target object, and does not indicate the exact center.
Specifically, it is assumed that a variation to an extent of manufacturing error is tolerated. The same applies to point symmetry, line symmetry, and the like.

### (sensor chip 100)

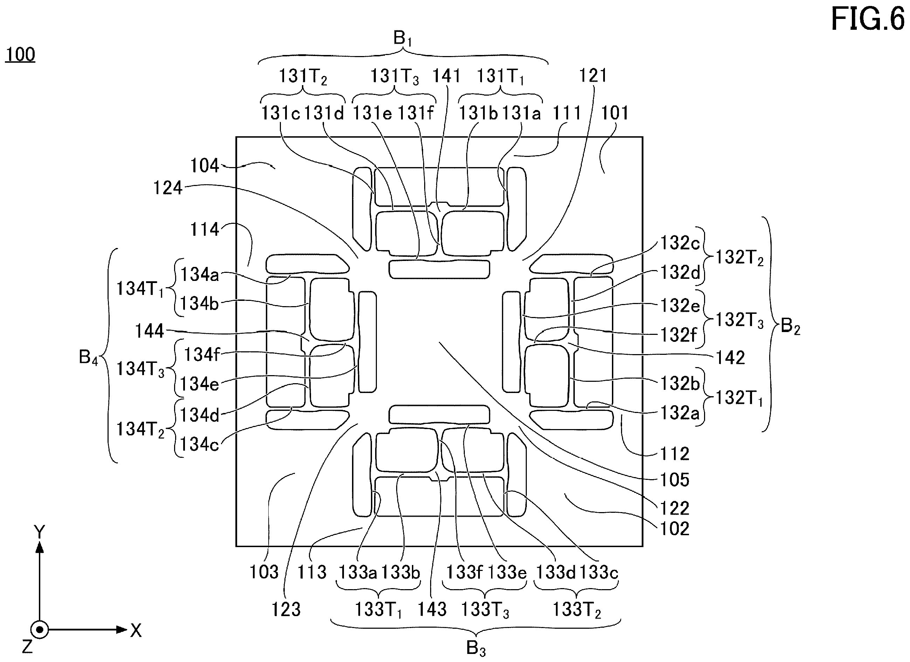

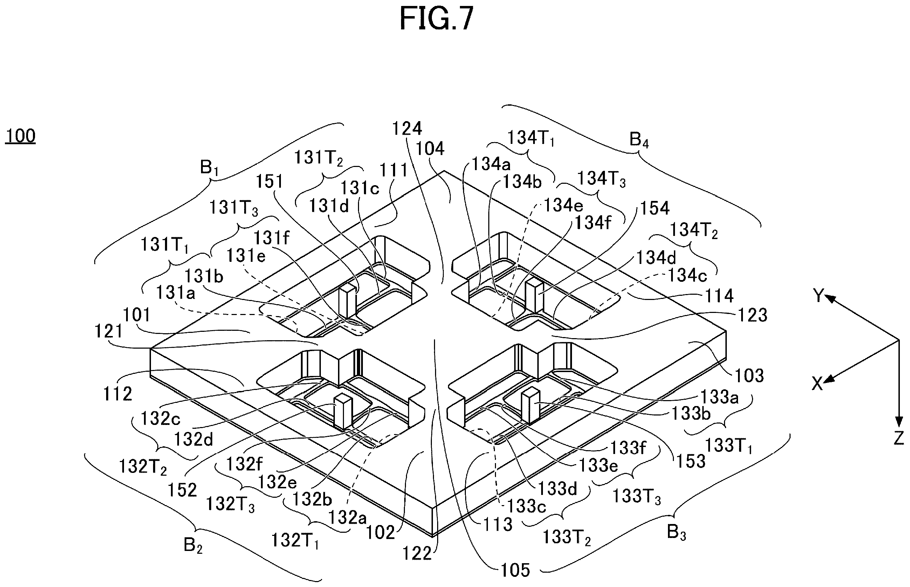

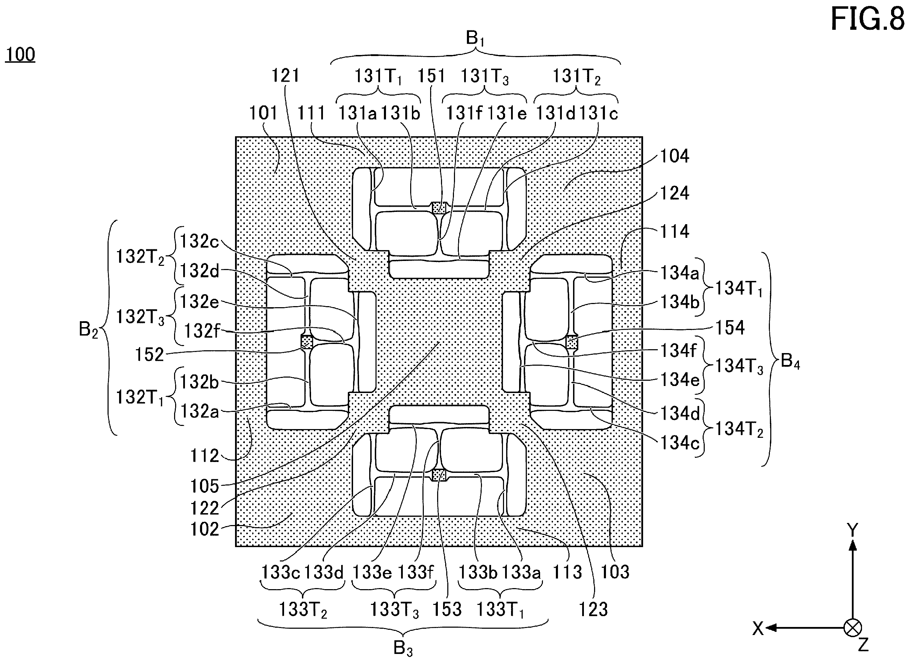

Fig. 5 is a perspective view illustrating the sensor chip 100 as seen from the upper side in the Z-axis direction. Fig. 6 is a plan view illustrating the sensor chip 100 as seen from the upper side in the Z-axis direction. Fig. 7 is a perspective view illustrating the sensor chip 100 as seen from the lower side in the Z-axis direction. Fig. 8 is bottom view illustrating the sensor chip 100 as seen from the lower side in the Z-axis direction. In Fig. 8, for the sake of convenience, a surface of the same height is indicated by a same dotted pattern. In this case, an X-axis direction parallel to one side of the upper surface of the sensor chip 100 is referred to as an X-axis direction, a direction perpendicular thereto is referred to as a Y-axis direction, and a thickness direction of the sensor chip 100 (a direction normal to the upper surface of the sensor chip 100) is referred to as a Z-axis direction. The X-axis direction, the Y-axis direction, and the Z-axis direction are orthogonal to each other.

The sensor chip 100 illustrated in Fig. 5 to Fig. 8 is a microelectromechanical systems (MEMS) sensor chip capable of performing detection with respect to up to six axes with a single chip, and is constituted by a semiconductor substrate such as a silicon on insulator (SOI) substrate and the like. For example, the planar shape of the sensor chip 100 may be a rectangle (a square or a rectangle) one side of which is about 7,000 µm.

The sensor chip 100 includes five support portions 101 to 105 in a pillar shape. For example, the planar shape of the support portions 101 to 105 may be a square having a side of about 2000 µm. The support portions 101 to 104 are provided at four corners of the sensor chip 100 in the rectangular shape. The support portion 105 is provided in the center of the sensor chip 100 in the rectangular shape. The support portions 101 to 104 are a typical example of a first support portion according to the present disclosure. The support portion 105 is a typical example of a second support portion according to the present disclosure.

A frame portion 112 is provided between the support portion 101 and the support portion 102. Both ends of the frame portion 112 are fixed to the support portion 101 and the support portion 102 (i.e., the frame portion 112 connects neighboring support portions with each other). A frame portion 113 is provided between the support portion 102 and the support portion 103. Both ends of the frame portion 113 are fixed to the support portion 102 and the support portion 103 (i.e., the frame portion 113 connects neighboring support portions with each other).

A frame portion 114 is provided between the support portion 103 and the support portion 104. Both ends of the frame portion 114 are fixed to the support portion 103 and the support portion 104 (i.e., the frame portion 114 connects neighboring support portions with each other). A frame portion 111 is provided between the support portion 104 and the support portion 101. Both ends of the frame portion 111 are fixed to the support portion 104 and the support portion 101 (i.e., the frame portion 111 connects neighboring support portions with each other).

In other words, the four frame portions 111, 112, 113, and 114 are formed in a frame shape, and the corner portions that forms intersections of the frame portions are the support portions 101, 102, 103, and 104.

The corner portion on the inner side of the support portion 101 and the corner portion of the support portion 105 opposite thereto are connected by a coupling portion 121. The corner portion on the inner side of the support portion 102 and the corner portion of the support portion 105 opposite thereto are connected by a coupling portion 122.

The corner portion on the inner side of the support portion 103 and the corner portion of the support portion 105 opposite thereto are connected by a coupling portion 123. The corner portion on the inner side of the support portion 104 and the corner portion of the support portion 105 opposite thereto are connected by a coupling portion 124.

Specifically, the sensor chip 100 includes coupling portions 121 to 124 for connecting the support portion 105 and the support portions 101 to 104. The coupling portions 121 to 124 are provided diagonally with respect to the X-axis direction (the Y-axis direction). Specifically, the coupling portions 121 to 124 are provided non-parallel to the frame portion 111, 112, 113, and 114.

For example, the support portions 101 to 105, the frame portions 111 to 114, and the coupling portions 121 to 124 may be constituted by an active layer, a BOX layer, and a support layer of a SOI substrate, and a thickness of each of the layers may be, for example, about 400 µm to 600 µm.

The sensor chip 100 includes four detection blocks B1 to B4. Also, each of the detection blocks include three T-shaped beam structures in which a piezo resistance element, i.e., a strain detection element, is provided. In this case, the T-shaped beam structure means a structure including: a first detection beam; and a second detection beam that extends from the central portion of the first detection beam in a direction orthogonal to the first detection beam and that is connected to the force application point.

Although the detection beam means a beam in which the piezo resistance element can be provided, the piezo resistance element does not have to be necessarily provided. Specifically, although the detection beams are provided with the piezo resistance elements and are thus capable of detecting a force or a moment, the sensor chip 100 may have a detection beam that is not provided with a piezo resistance element and that is not used for detection of a force or a moment.

Specifically, the detection block B1 includes T-shaped beam structures 131T1, 131T2, and 131T3. The detection block B2 includes T-shaped beam structure 132T1, 132T2, and 132T3. The detection block B3 includes T-shaped beam structure 133T1, 133T2, and 133T3. The detection block B4 includes T-shaped beam structure 134T1, 134T2, and 134T3. Hereinafter, the beam structures are explained in detail.

The detection block B1 includes a first detection beam 131a provided in parallel with an edge of the support portion 101 on the side of the support portion 104 and spaced apart by a predetermined distance from the edge, so as to bridge the frame portion 111 on the side closer to the support portion 101 and the coupling portion 121 on the side closer to the support portion 105 in the plan view. In addition, the detection block B1 includes a second detection beam 131b one end of which is connected to the central portion in the longitudinal direction of the first detection beam 131a, the second detection beam 131b extending in a direction perpendicular to the longitudinal direction of the first detection beam 131a toward the support portion 104. The first detection beam 131a and the second detection beam 131b form a T-shaped beam structure 131T1.

The detection block B1 includes a first detection beam 131c provided in parallel with an edge of the support portion 104 on the side of the support portion 101 and spaced apart by a predetermined distance from the edge, so as to bridge the frame portion 111 on the side closer to the support portion 104 and the coupling portion 124 on the side closer to the support portion 105 in the plan view. In addition, the detection block B1 includes a second detection beam 131d one end of which is connected to the central portion in the longitudinal direction of the first detection beam 131c, the second detection beam 131d extending in a direction perpendicular to the longitudinal direction of the first detection beam 131c toward the support portion 101. The first detection beam 131c and the second detection beam 131d form a T-shaped beam structure 131T2.

The detection block B1 includes a first detection beam 131e provided in parallel with an edge of the support portion 105 on the side of the frame portion 111 and spaced apart by a predetermined distance from the edge, so as to bridge the coupling portion 121 on the side closer to the support portion 105 and the coupling portion 124 on the side closer to the support portion 105 in the plan view. In addition, the detection block B1 includes a second detection beam 131f one end of which is connected to the central portion in the longitudinal direction of the first detection beam 131e, the second detection beam 131f extending in a direction perpendicular to the longitudinal direction of the first detection beam 131e toward the frame portion 111. The first detection beam 131e and the second detection beam 131f form a T-shaped beam structure 131T3.

The other end of the second detection beam 131b, the other end of the second detection beam 131d, and the other end of the second detection beam 131f are connected with each other to form a connection portion 141. The force application point 151 is provided on the lower surface-side of the connection portion 141. For example, the force application point 151 is in a shape of a quadrangular pillar. The T-shaped beam structures 131T1, 131T2, and 131T3, the connection portion 141, and the force application point 151 constitute the detection block B1.

In the detection block B1, the first detection beam 131a, the first detection beam 131c, and the second detection beam 131f are parallel, and the second detection beams 131b and 131d and the first detection beam 131e are parallel. The thickness of each of the detection beams of the detection block B1 is, for example, about 30 µm to 50 µm.

The detection block B2 includes a first detection beam 132a provided in parallel with an edge of the support portion 102 on the side of the support portion 101 and spaced apart by a predetermined distance from the edge, so as to bridge the frame portion 112 on the side closer to the support portion 102 and the coupling portion 122 on the side closer to the support portion 105 in the plan view. In addition, the detection block B2 includes a second detection beam 132b one end of which is connected to the central portion in the longitudinal direction of the first detection beam 132a, the second detection beam 132b extending in a direction perpendicular to the longitudinal direction of the first detection beam 132a toward the support portion 101. The first detection beam 132a and the second detection beam 132b form a T-shaped beam structure 132T1.

The detection block B2 includes a first detection beam 132c provided in parallel with an edge of the support portion 101 on the side of the support portion 102 and spaced apart by a predetermined distance from the edge, so as to bridge the frame portion 112 on the side closer to the support portion 101 and the coupling portion 121 on the side closer to the support portion 105 in the plan view. In addition, the detection block B2 includes a second detection beam 132d one end of which is connected to the central portion in the longitudinal direction of the first detection beam 132c, the second detection beam 132d extending in a direction perpendicular to the longitudinal direction of the first detection beam 132c toward the support portion 102. The first detection beam 132c and the second detection beam 132d form a T-shaped beam structure 132T2.

The detection block B2 includes a first detection beam 132e provided in parallel with an edge of the support portion 105 on the side of the support portion 112 and spaced apart by a predetermined distance from the edge, so as to bridge the coupling portion 122 on the side closer to the support portion 105 and the coupling portion 121 on the side closer to the support portion 105 in the plan view. In addition, the detection block B2 includes a second detection beam 132f one end of which is connected to the central portion in the longitudinal direction of the first detection beam 132e, the second detection beam 132f extending in a direction perpendicular to the longitudinal direction of the first detection beam 132e toward the frame portion 112. The first detection beam 132e and the second detection beam 132f form a T-shaped beam structure 132T3.

The other end of the second detection beam 132b, the other end of the second detection beam 132d, and the other end of the second detection beam 132f are connected with each other to form a connection portion 142. The force application point 152 is provided on the lower surface-side of the connection portion 142. For example, the force application point 152 is in a shape of a quadrangular pillar. The T-shaped beam structures 132T1, 132T2, and 132T3, the connection portion 142, and the force application point 152 constitute the detection block B2.

In the detection block B2, the first detection beam 132a, the first detection beam 132c, and the second detection beam 132f are parallel, and the second detection beams 132b and 132d and the first detection beam 132e are parallel. The thickness of each of the detection beams of the detection block B2 is, for example, about 30 µm to 50 µm.

The detection block B3 includes a first detection beam 133a provided in parallel with an edge of the support portion 103 on the side of the support portion 102 and spaced apart by a predetermined distance from the edge, so as to bridge the frame portion 113 on the side closer to the support portion 103 and the coupling portion 123 on the side closer to the support portion 105 in the plan view. In addition, the detection block B3 includes a second detection beam 133b one end of which is connected to the central portion in the longitudinal direction of the first detection beam 133a, the second detection beam 133b extending in a direction perpendicular to the longitudinal direction of the first detection beam 133a toward the support portion 102. The first detection beam 133a and the second detection beam 133b form a T-shaped beam structure 133T1.

The detection block B3 includes a first detection beam 133c provided in parallel with an edge of the support portion 102 on the side of the support portion 103 and spaced apart by a predetermined distance from the edge, so as to bridge the frame portion 113 on the side closer to the support portion 102 and the coupling portion 122 on the side closer to the support portion 105 in the plan view. In addition, the detection block B3 includes a second detection beam 133d one end of which is connected to the central portion in the longitudinal direction of the first detection beam 133c, the second detection beam 133d extending in a direction perpendicular to the longitudinal direction of the first detection beam 133c toward the support portion 103. The first detection beam 133c and the second detection beam 133d form a T-shaped beam structure 133T2.

The detection block B3 includes a first detection beam 133e provided in parallel with an edge of the support portion 105 on the side of the frame portion 113 and spaced apart by a predetermined distance from the edge, so as to bridge the coupling portion 123 on the side closer to the support portion 105 and the coupling portion 122 on the side closer to the support portion 105 in the plan view. In addition, the detection block B3 includes a second detection beam 133f one end of which is connected to the central portion in the longitudinal direction of the first detection beam 133e, the second detection beam 133f extending in a direction perpendicular to the longitudinal direction of the first detection beam 133e toward the frame portion 113. The first detection beam 133e and the second detection beam 133f form a T-shaped beam structure 133T3.

The other end of the second detection beam 133b, the other end of the second detection beam 133d, and the other end of the second detection beam 133f are connected with each other to form a connection portion 143. The force application point 153 is provided on the lower surface-side of the connection portion 143. For example, the force application point 153 is in a shape of a quadrangular pillar. The T-shaped beam structures 133T1, 133T2, and 133T3, the connection portion 143, and the force application point 153 constitute the detection block B3.

In the detection block B3, the first detection beam 133a, the first detection beam 133c, and the second detection beam 133f are parallel, and the second detection beams 133b and 133d and the first detection beam 133e are parallel. The thickness of each of the detection beams of the detection block B3 is, for example, about 30 µm to 50 µm.

The detection block B4 includes a first detection beam 134a provided in parallel with an edge of the support portion 104 on the side of the support portion 103 and spaced apart by a predetermined distance from the edge, so as to bridge the frame portion 114 on the side closer to the support portion 104 and the coupling portion 124 on the side closer to the support portion 105 in the plan view. In addition, the detection block B4 includes a second detection beam 134b one end of which is connected to the central portion in the longitudinal direction of the first detection beam 134a, the second detection beam 134b extending in a direction perpendicular to the longitudinal direction of the first detection beam 134a toward the support portion 103. The first detection beam 134a and the second detection beam 134b form a T-shaped beam structure 134T1.

The detection block B4 includes a first detection beam 134c provided in parallel with an edge of the support portion 103 on the side of the support portion 104 and spaced apart by a predetermined distance from the edge, so as to bridge the frame portion 114 on the side closer to the support portion 103 and the coupling portion 123 on the side closer to the support portion 105 in the plan view. In addition, the detection block B4 includes a second detection beam 134d one end of which is connected to the central portion in the longitudinal direction of the first detection beam 134c, the second detection beam 134d extending in a direction perpendicular to the longitudinal direction of the first detection beam 134c toward the support portion 104. The first detection beam 134c and the second detection beam 134d form a T-shaped beam structure 134T2.

The detection block B4 includes a first detection beam 134e provided in parallel with an edge of the support portion 105 on the side of the frame portion 114 and spaced apart by a predetermined distance from the edge, so as to bridge the coupling portion 124 on the side closer to the support portion 105 and the coupling portion 123 on the side closer to the support portion 105 in the plan view. In addition, the detection block B4 includes a second detection beam 134f one end of which is connected to the central portion in the longitudinal direction of the first detection beam 134e, the second detection beam 134f extending in a direction perpendicular to the longitudinal direction of the first detection beam 134e toward the frame portion 114. The first detection beam 134e and the second detection beam 134f form a T-shaped beam structure 134T3.

The other end of the second detection beam 134b, the other end of the second detection beam 134d, and the other end of the second detection beam 134f are connected with each other to form a connection portion 144. The force application point 154 is provided on the lower surface-side of the connection portion 144. For example, the force application point 154 is in a shape of a quadrangular pillar. The T-shaped beam structures 134T1, 134T2, and 134T3, the connection portion 144, and the force application point 154 constitute the detection block B4.

In the detection block B4, the first detection beam 134a, the first detection beam 134c, and the second detection beam 134f are parallel, and the second detection beams 134b and 134d and the first detection beam 134e are parallel. The thickness of each of the detection beams of the detection block B4 is, for example, about 30 µm to 50 µm.

As described above, the sensor chip 100 includes four detection blocks (detection blocks B1 to B4). Each of the detection blocks is provided in an area surrounded by neighboring support portions of the support portions 101 to 104, the frame portion and the coupling portions connected to the neighboring support portions, and the support portion 105. For example, in the plan view, the detection blocks can be arranged in a point symmetrical arrangement about the center of the sensor chip.

Each of the detection blocks includes three T-shaped beam structures. In each of the detection blocks, in the plan view, three T-shaped beam structures include: two T-shaped beam structures of which the first detection beams are arranged in parallel and are disposed with the connection portion interposed therebetween; and one T-shaped beam structure including the first detection beam that is disposed in parallel with the second detection beams of the two T-shaped beam structures. The first detection beam of the one T-shaped beam structure is provided between the connection portion and the support portion 105.

For example, in the detection block B1 in the plan view, three T-shaped beam structures include: the T-shaped beam structures 131T1 and 131T2 of which the first detection beam 131a and the first detection beam 131c are arranged in parallel and are disposed with the connection portion 141 interposed therebetween; and the T-shaped beam structure 131T3 including the first detection beam 131e that is disposed in parallel with the second detection beams 131b and 131d of the T-shaped beam structures 131T1 and 131T2. The first detection beam 131e of the T-shaped beam structure 131T3 is disposed between the connection portion 141 and the support portion 105. The detection blocks B2 to B4 have substantially the same structure.

The force application points 151 to 154 is a portion to which an external force is applied, and can be formed by, for example, a BOX layer and a support layer of an SOI substrate. The lower surfaces of each of the force application points 151 to 154 are substantially flush with the lower surfaces of the support portions 101 to 105.

In this manner, by retrieving force or displacement from the four force application points 151 to 154, different deformations of the beams are obtained according to the type of the force, so that the sensor can achieve a high degree of separability of six axes. The number of force application points is the same as the number of displacement input portions of the strain bodies to be combined.

In order to alleviate concentration of stress, the sensor chip 100 is preferably configured such that portions forming inner corners are formed in a curved shape.

The support portions 101 to 105 of the sensor chip 100 are connected to the non-movable unit of the strain body 200, and the force application points 151 to 154 are connected to the movable unit of the strain body 200. However, even when the movable unit and the non-movable unit are replaced with each other, the function of the force sensor apparatus can be achieved. Specifically, the support portions 101 to 105 of the sensor chip 100 may be connected to the movable unit of the strain body 200, and the force application points 151 to 154 may be connected to the non-movable unit of the strain body 200.

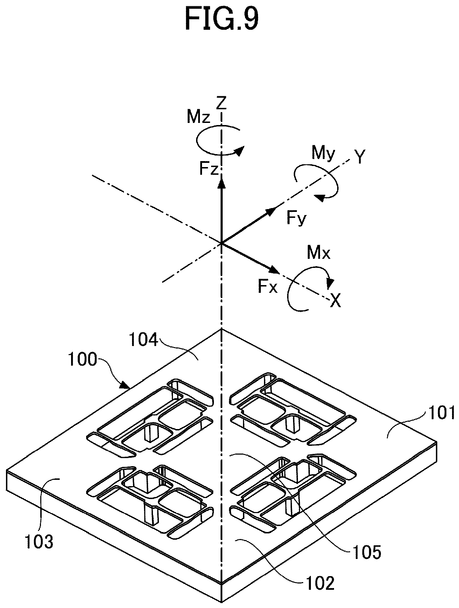

Fig. 9 is a drawing for explaining reference symbols indicating the force and the moment applied to each axis. As illustrated in Fig. 9, a force in the X-axis direction is denoted as Fx, a force in the Y-axis direction is denoted as Fy, and a force in the Z-axis direction is denoted as Fz. A moment of rotation about the X axis is denoted as Mx, a moment of rotation about the Y axis is denoted as My, and a moment of rotation about the Z axis is denoted as Mz.

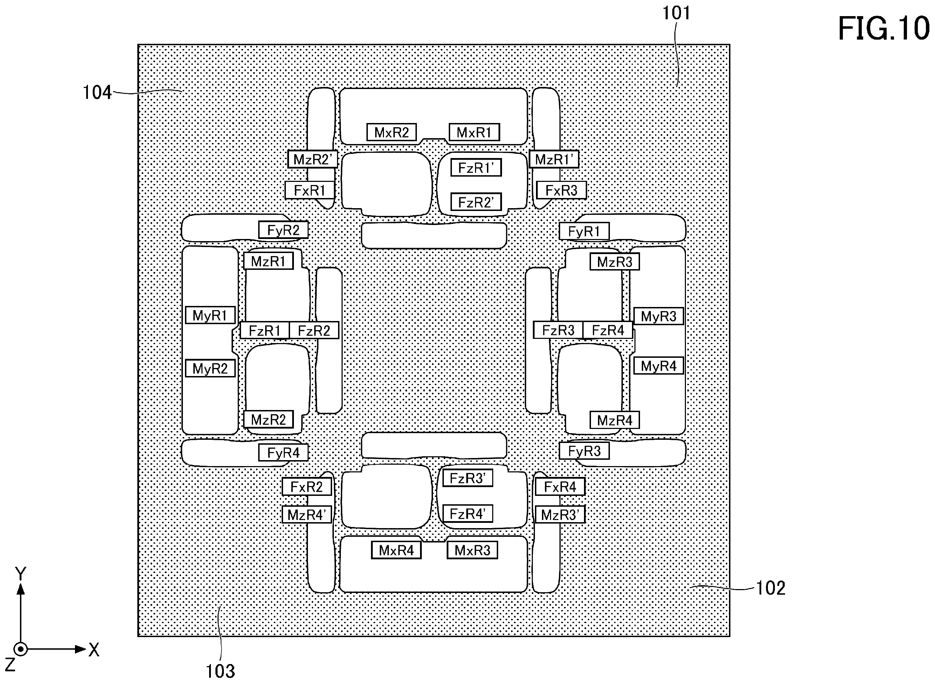

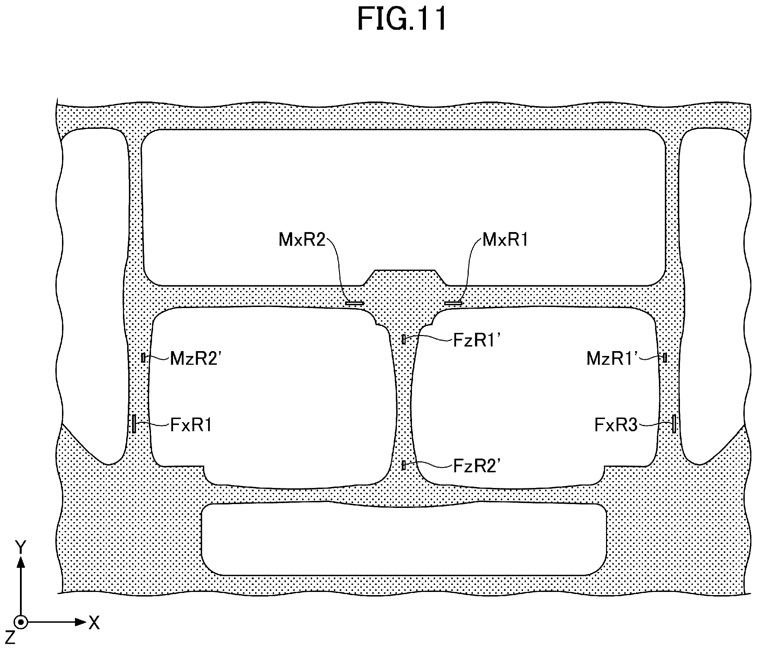

Fig. 10 is a drawing illustrating an example of an arrangement of piezo resistance elements of the sensor chip 100. Fig. 11 is a partially enlarged view of one detection block of the sensor chip as illustrated in Fig. 10. As illustrated in Fig. 10 and Fig. 11, piezo resistance elements are provided at predetermined positions of the detection blocks corresponding to the four force application points 151 to 154. The arrangement of the piezo resistance elements in the other detection blocks as illustrated in Fig. 10 is substantially the same as the arrangement of the piezo resistance elements in the detection block as illustrated in Fig. 11.

As illustrated in Fig. 5 to Fig. 8, Fig. 10, and Fig. 11, in the detection block B1 including the connection portion 141 and the force application point 151, a piezo resistance element MzR1' is disposed in a portion of the first detection beam 131a that is located between the second detection beam 131b and the first detection beam 131e on a side closer to the second detection beam 131b. A piezo resistance element FxR3 is disposed in a portion of the first detection beam 131a that is located between the second detection beam 131b and the first detection beam 131e on a side closer to the first detection beam 131e. A piezo resistance element MxR1 is disposed in the second detection beam 131b on a side closer to the connection portion 141.

A piezo resistance element MzR2' is disposed in a portion of the first detection beam 131c that is located between the second detection beam 131d and the first detection beam 131e on a side closer to the second detection beam 131d. A piezo resistance element FxR1 is disposed in a portion of the first detection beam 131c that is located between the second detection beam 131d and the first detection beam 131e on a side closer to the first detection beam 131e. A piezo resistance element MxR2 is disposed in the second detection beam 131d on a side closer to the connection portion 141.

A piezo resistance element FzR1' is disposed in the second detection beam 131f on a side closer to the connection portion 141. A piezo resistance element FzR2' is disposed in the second detection beam 131f on a side closer to the first detection beam 131e. The piezo resistance elements MzR1', FxR3, MxR1, MzR2', FxR1, and MxR2 are arranged at positions that are offset from the center in the longitudinal direction of the detection beams.

In the detection block B2 including the connection portion 142 and the force application point 152, a piezo resistance element MzR4 is disposed in a portion of the first detection beam 132a that is located between the second detection beam 132b and the first detection beam 132e on a side closer to the second detection beam 132b. A piezo resistance element FyR3 is disposed in a portion of the first detection beam 132a that is located between the second detection beam 132b and the first detection beam 132e on a side closer to the first detection beam 132e. A piezo resistance element MyR4 is disposed in the second detection beam 132b on a side closer to the connection portion 142.

A piezo resistance element MzR3 is disposed in a portion of the first detection beam 132c that is located between the second detection beam 132d and the first detection beam 132e on a side closer to the second detection beam 132d. A piezo resistance element FyR1 is disposed in a portion of the first detection beam 132c that is located between the second detection beam 132d and the first detection beam 132e on a side closer to the first detection beam 132e. A piezo resistance element MyR3 is disposed in the second detection beam 132d on a side closer to the connection portion 142.

A piezo resistance element FzR4 is disposed in the second detection beam 132f on a side closer to the connection portion 142. A piezo resistance element FzR3 is disposed in the second detection beam 132f on a side closer to the first detection beam 132e. The piezo resistance elements MzR4, FyR3, MyR4, MzR3, FyR1, and MyR3 are arranged at positions that are offset from the center in the longitudinal direction of the detection beams.

In the detection block B3 including the connection portion 143 and the force application point 153, a piezo resistance element MzR4' is disposed in a portion of the first detection beam 133a that is located between the second detection beam 133b and the first detection beam 133e on a side closer to the second detection beam 133b. A piezo resistance element FxR2 is disposed in a portion of the first detection beam 133a that is located between the second detection beam 133b and the first detection beam 133e on a side closer to the first detection beam 133e. A piezo resistance element MxR4 is disposed in the second detection beam 133b on a side closer to the connection portion 143.

A piezo resistance element MzR3' is disposed in a portion of the first detection beam 133c that is located between the second detection beam 133d and the first detection beam 133e on a side closer to the second detection beam 133d. A piezo resistance element FxR4 is disposed in a portion of the first detection beam 133c that is located between the second detection beam 133d and the first detection beam 133e on a side closer to the first detection beam 133e. A piezo resistance element MxR3 is disposed in the second detection beam 133d on a side closer to the connection portion 143.

A piezo resistance element FzR4' is disposed in the second detection beam 133f on a side closer to the connection portion 143. A piezo resistance element FzR3' is disposed in the second detection beam 133f on a side closer to the first detection beam 133e. The piezo resistance elements MzR4', FxR2, MxR4, MzR3', FxR4, and MxR3 are arranged at positions that are offset from the center in the longitudinal direction of the detection beams.

In the detection block B4 including the connection portion 144 and the force application point 154, a piezo resistance element MzR1 is disposed in a portion of the first detection beam 134a that is located between the second detection beam 134b and the first detection beam 134e on a side closer to the second detection beam 134b. A piezo resistance element FyR2 is disposed in a portion of the first detection beam 134a that is located between the second detection beam 134b and the first detection beam 134e on a side closer to the first detection beam 134e. A piezo resistance element MyR1 is disposed in the second detection beam 134b on a side closer to the connection portion 144.

A piezo resistance element MzR2 is disposed in a portion of the first detection beam 134c that is located between the second detection beam 134d and the first detection beam 134e on a side closer to the second detection beam 134d. A piezo resistance element FyR4 is disposed in a portion of the first detection beam 134c that is located between the second detection beam 134d and the first detection beam 134e on a side closer to the first detection beam 134e. A piezo resistance element MyR2 is disposed in the second detection beam 134d on a side closer to the connection portion 144.

A piezo resistance element FzR1 is disposed in the second detection beam 134f on a side closer to the connection portion 144. A piezo resistance element FzR2 is disposed in the second detection beam 134f on a side closer to the first detection beam 134e. The piezo resistance elements MzR1, FyR2, MyR1, MzR2, FyR4, and MyR2 are arranged at positions that are offset from the center in the longitudinal direction of the detection beams.

In this manner, in the sensor chip 100, multiple piezo resistance elements are arranged in the respective detection block in a distributed manner. Therefore, a force or a moment in a predetermined axial direction can be detected with respect to up to six axes on the basis of change in the outputs of multiple piezo resistance elements arranged in predetermined beams in response to inputs applied to the force application points 151 to 154.

In the sensor chip 100, a dummy piezo resistance element may be provided in addition to the piezo resistance elements used for detection of strain. The dummy piezo resistance element is used to adjust the balance of the stress applied to the detection beams and the resistances of the bridge circuits, and for example, all the piezo resistance elements including the piezo resistance elements used for detection of strain are arranged in a point symmetrical manner about the center of the support portion 105.

In the sensor chip 100, multiple piezo resistance elements for detecting the displacement in the X-axis direction and the displacement in the Y-axis direction are provided in the first detection beams constituting the T-shaped beam structures. Multiple piezo resistance elements for detecting the displacement in the Z-axis direction are provided in the second detection beams constituting the T-shaped beam structures. Multiple piezo resistance elements for detecting the moment in the Z-axis direction are provided in the first detection beams constituting the T-shaped beam structures. Multiple piezo resistance elements for detecting the moment in the X-axis direction and the moment in the Y-axis direction are provided in the second detection beams constituting the T-shaped beam structures.

In this case, the piezo resistance elements FxR1 to FxR4 detect the force Fx, the piezo resistance elements FyR1 to FyR4 detect the force Fy, and the piezo resistance elements FzR1 to FzR4 and FzR1' to FzR4' detect the force Fz. The piezo resistance elements MxR1 to MxR4 detect the moment Mx, the piezo resistance elements MyR1 to MyR4 detect the moment My, and the piezo resistance element MzR1 to MzR4 and MzR1' to MzR4' detect the moment Mz.

In this manner, in the sensor chip 100, multiple piezo resistance elements are arranged in the respective detection block in a distributed manner. Therefore, a displacement in a predetermined axial direction can be detected with respect to up to six axes on the basis of change in the outputs of multiple piezo resistance elements arranged in predetermined beams in response to directions (axial directions) of force or displacement applied (transmitted) to the force application points 151 to 154. In addition, by changing the thicknesses and the widths of the detection beams, adjustments can be performed so as to, e.g., uniformize the detection sensitivity and improve the detection sensitivity.

The sensor chip may have a smaller number of piezo resistance elements. For example, the sensor chip may detect displacement in predetermined axial direction of five of less axes.

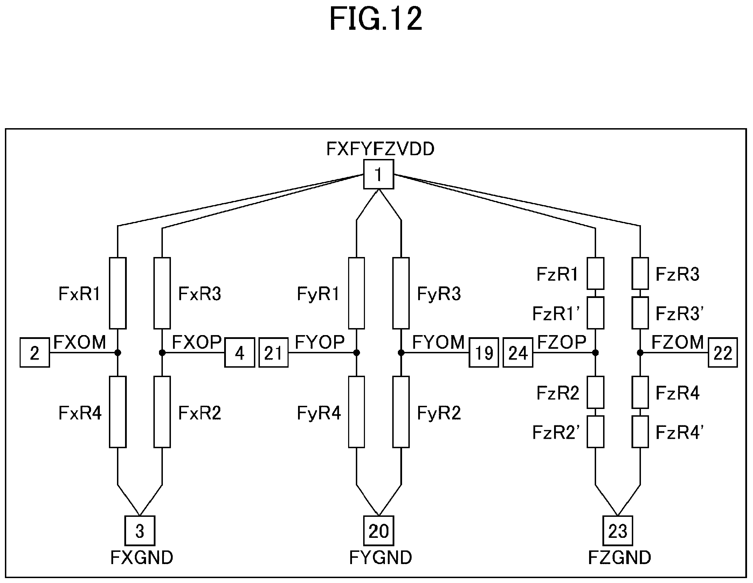

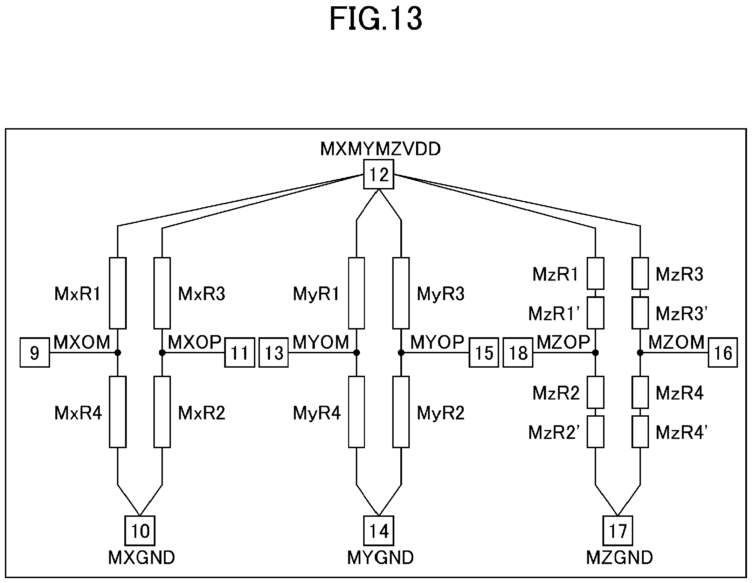

With the sensor chip 100, the force and the moment can be detected by using, for example, a detection circuit explained below. Fig. 12 and Fig. 13 are drawings illustrating an example of a detection circuit using piezo resistance elements. In Fig. 12 and Fig. 13, a numeral enclosed by a quadrangle denotes an external output terminal. For example, a numeral "1" denotes a power source terminal for the Fx axis, the Fy axis, and the Fz axis, a numeral "2" denotes an output negative terminal for the Fx axis, a numeral "3" denotes a ground (GND) terminal for the Fx axis, and a numeral "4" denotes an output positive terminal for the Fx axis. A numeral "19" denotes an output negative terminal for the Fy axis, a numeral "20" denotes a ground terminal for the Fy axis, and a numeral "21" denotes an output positive terminal for the Fy axis. A numeral "22" denotes an output negative terminal for the Fz axis, a numeral "23" denotes a ground terminal for the Fz axis, and a numeral "24" denotes an output positive terminal for the Fz axis.

A numeral "9" denotes an output negative terminal for the Mx axis, a numeral "10" denotes a ground terminal for the Mx axis, and a numeral "11" denotes an output positive terminal for the Mx axis. A numeral "12" denotes a power source terminal for the Mx axis, the My axis, and the Mz axis. A numeral "13" denotes an output negative terminal for the My axis, a numeral "14" denotes a ground terminal for the My axis, and a numeral "15" denotes an output positive terminal for the My axis. A numeral "16" denotes an output negative terminal for the Mz axis, a numeral "17" denotes a ground terminal for the Mz axis, and a numeral "18" denotes an output positive terminal for the Mz axis.

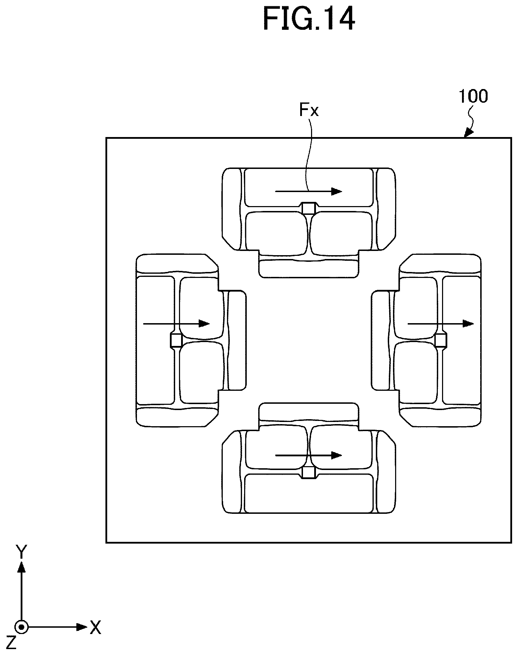

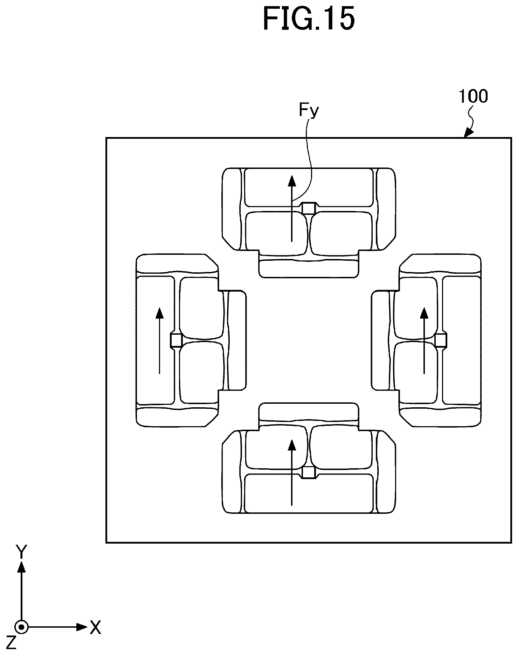

Next, deformation of the detection beam is explained. Fig. 14 is a drawing for explaining Fx input. Fig. 15 is a drawing for explaining Fy input. As illustrated in Fig. 14, in a case where the input from the strain body 200 on which the sensor chip 100 is mounted is Fx, all of the four force application points 151 to 154 attempt to move in a same direction (right direction in the example of Fig. 14). Likewise, as illustrated in Fig. 15, in a case where the input from the strain body 200 on which the sensor chip 100 is mounted is Fy, all of the four force application points 151 to 154 attempt to move in a same direction (upward direction in the example of Fig. 15). Specifically, in the sensor chip 100, there are four detection blocks, and in any of the detection blocks, all the force application points move in a same direction in response to the displacement in the X-axis direction and the displacement in the Y-axis direction.

In the sensor chip 100, the first detection beams of the T-shaped beam structures include one or more first detection beams that is orthogonal to the displacement direction of the input, so that the first detection beams orthogonal to the displacement direction of the input can support large deformation.

The beams used for detection of the Fx input are the first detection beams 131a, 131c, 133a, and 133c, any one of which is the first detection beam of the T-shaped beam structures provided a certain distance away from the force application point. The beams used for detection of the Fy input are the first detection beams 132a, 132c, 134a, and 134c, any one of which is the first detection beam of the T-shaped beam structures provided a certain distance away from the force application point.

In response to the Fx input and the Fy input, the first detection beams of the T-shaped beam structures having piezo resistance elements arranged therein deform greatly, so that the input force can be detected effectively. The beams that are not used for detection of the input are designed to be capable of deforming greatly so as to follow the displacement of the Fx input and the Fy input, and therefore, even when large Fx input or large Fy input, or both, are received, the detection beams are not destroyed.

Conversely, conventional sensor chips include a beam that cannot greatly deform in response to Fx input or Fy input, or both,, and therefore, when large Fx input or large Fy input, or both, are received, the detection beam that cannot deform may be destroyed. The sensor chip 100 can alleviate such a problem. Specifically, the sensor chip 100 can improve destruction resistance of the beams against displacements in various directions.

In this manner, the sensor chip 100 includes one or more first detection beams orthogonal to the displacement direction of the input, so that the first detection beam orthogonal to the displacement direction of the input can deform greatly. Therefore, Fx input and Fy input can be detected effectively, and furthermore, even when large Fx input or Fy input, or both, is received, the detection beam is not destroyed. As a result, the sensor chip 100 can support large ratings, and the measurement range and the load limit can be improved. For example, the sensor chip 100 can achieve a rating of 500N, which is about ten times greater than conventional sensor chips.

In each detection block, the T-shaped beam structure extending from the force application point in three directions deform in different manners in response to inputs, and therefore, a force in multiple axes can be detected with a high degree of separability.

Furthermore, the beam is in a T shape, and accordingly, there are many paths from the beams to the frame portion and the coupling portions, so that it is easy to arrange wires to the outer peripheral portion of the sensor chip, and the flexibility in layout can be improved.

In the sensor chip 100, the first detection beams 131a, 131c, 132a, 132c, 133a, 133c, 134a, and 134c arranged opposite to one another with the force application point interposed therebetween greatly deform in response to the moment in the Z-axis direction. Therefore, the piezo resistance elements can be provided in some or all of the first detection beams.

In response to displacement in the Z-axis direction, mainly, the second detection beams 131b, 131d, 131f, 132b, 132d, 132f, 133b, 133d, 133f, 134b, 134d, and 134f directly connected to the force application points greatly deform. Therefore, the piezo resistance elements can be provided in some or all of the second detection beams.

### (Strain body 200)

As illustrated in Fig. 1 and Fig. 2, the strain body 200 includes the force-receiving plate 210, the strain unit 220, the input transmission unit 230, and the lid plate 240. Hereinafter, the configuration of the strain body 200 is explained.

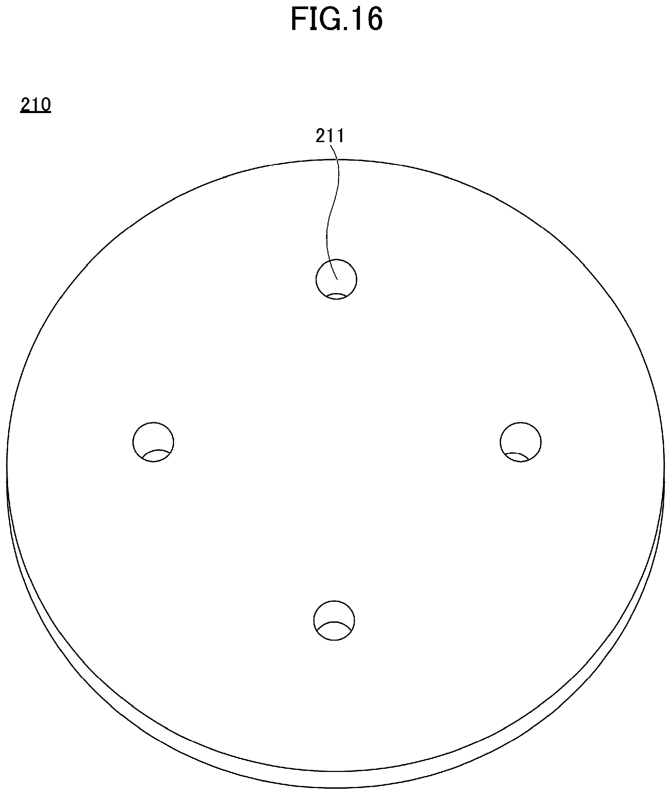

Fig. 16 is a perspective view illustrating an example of a force-receiving plate constituting the strain body 200. As illustrated in Fig. 16, the force-receiving plate 210 is a substantially disk-shaped member, and is a member to which a force or a moment is input from a measurement target object. In a case where the force or the moment is input from the measurement target object, the force-receiving plate 210 does not appreciably deform, so that the deformation (displacement) is transmitted without loss to the strain unit 220 connected to the force-receiving plate 210. Through holes 211 are provided in the force-receiving plate 210. For example, the through holes 211 can be used to fasten the force-receiving plate 210 with the measurement target object with screws.

Fig. 17 is a perspective view illustrating an example of a strain unit constituting the strain body 200. As illustrated in Fig. 17, the strain unit 220 is generally a substantially disk-shaped member, and is a portion that deforms in response to the force from the force-receiving plate 210.

The strain unit 220 includes: a substantially ring-shaped outer frame portion 221 in a plan view; a substantially rectangular central portion 222 in a plan view provided on an inner side of the outer frame portion 221, spaced apart from the outer frame portion 221; and multiple beam structures 223 bridging the outer frame portion 221 and the central portion 222. Reinforcement portions 222a reinforcing the connection with the force-receiving plate 210 are provided at the four corners of the rectangle of the central portion 222. The external diameter of the outer frame portion 221 is, for example, about 50 mm. The thickness of the beam structure 223 is, for example, about 10 mm to 15 mm.

The multiple beam structure 223 are arranged, for example, in a point symmetrical arrangement about the center of the strain unit 220. For example, four beam structures 223 are provided. For example, each of the beam structures 223 is in a T shape that includes a first beam and a second beam that extends in a direction orthogonal to the first beam from the central portion of the first beam. Both ends of the first beam are connected to the outer frame portion 221, and the end of the second beam is connected to the central portion 222. For example, in the plan view, the strain unit 220 is fourfold symmetric about the center of the outer frame portion 221.

The central portion 222 is formed to be thinner than the outer frame portion 221, and the beam structure 223 is formed to be furthermore thinner than the central portion 222. The upper surface of the central portion 222 and the upper surface of the beam structure 223 are substantially flush with each other, and are at a position lower than the upper surface of the outer frame portion 221. The lower surface of the central portion 222 protrudes slightly from the lower surface of the outer frame portion 221. The lower surface of the beam structure 223 is at a position higher than the lower surface of the outer frame portion 221 and the lower surface of the central portion 222. Only the beam structure 223 and the central portion 222 deform in response to the force from the force-receiving plate 210, and the outer frame portion 221 does not deform. However, the central portion 222 simply moves according to deformation of the beam structure 223, and the central portion 222 does not deform.

A groove 220x in a substantially rectangular shape in the plan view that is open on a side of the input transmission unit 230 (depressed to a side of the force-receiving plate 210) is formed in proximity to the center of a surface of the central portion 222 on a side of the input transmission unit 230. A groove 220y that is further depressed to the side of the force-receiving plate 210 from the bottom surface of the groove 220x is formed on the inner side of the groove 220x. The groove 220y has such a square-shaped groove in the plan view and a cross-shaped groove, constituted by two thin and long grooves that are longer than one side of the square and that are orthogonal to each other, overlap with each other with their centers aligned. The square-shaped groove in the plan view and the cross-shaped groove in the plan view have the same depth.

At the four corner portions of the square-shaped groove on the outer side of the cross-shaped groove, four first connection portions 224a in a substantially circular pillar-shape protruding to the side of the input transmission unit 230 are provided so as not to be in contact with the inner wall of the groove 220y. At the central portion of the square-shaped groove, a second connection portion 224b in a substantially quadrangular pillar-shape protruding to the side of the input transmission unit 230 is provided.

The first connection portions 224a are portions connected to the support portions 101 to 104 of the sensor chip 100. The second connection portion 224b is a portion connected to the support portion 105 of the sensor chip 100. The upper surfaces of the first connection portions 224a and the second connection portion 224b are substantially flush with each other, and are at a position lower than the upper surface of the central portion 222 and the upper surface of the beam structure 223.

Because a space is provided on the upper surface side of the central portion 222, for example, a circuit board and the like on which electronic components such as a connector, a semiconductor device, and the like are mounted may be provided on the upper surface side of the central portion 222 so as not to protrude from the upper surface of the outer frame portion 221.

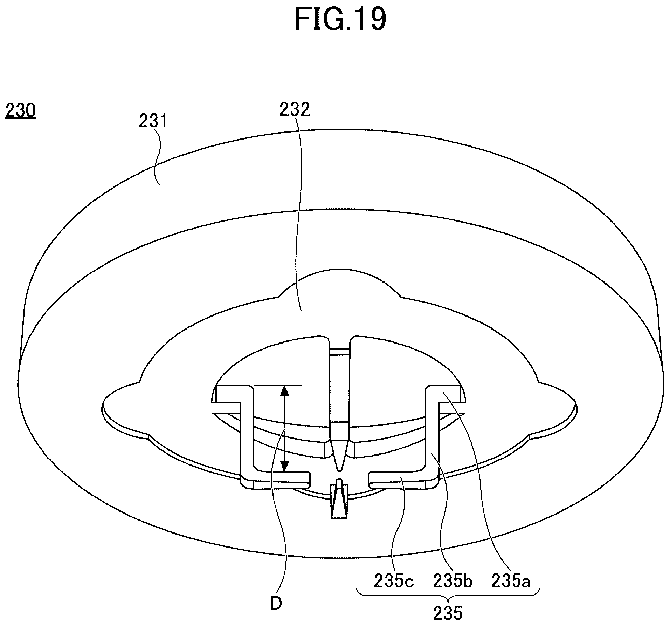

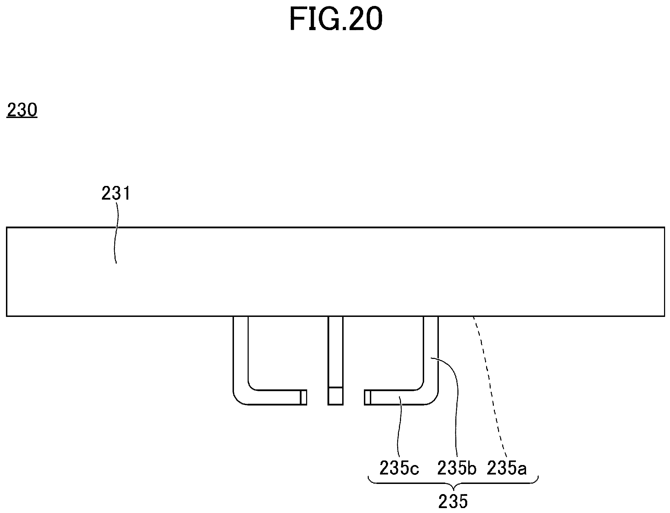

Fig. 18 is a perspective view of an upper surface-side illustrating an example of an input transmission unit constituting the strain body 200. Fig. 19 is a perspective view of a lower surface-side illustrating an example of the input transmission unit constituting the strain body 200. Fig. 20 is a side view illustrating an example of the input transmission unit constituting the strain body 200. As illustrated in Fig. 18 to Fig. 20, the input transmission unit 230 is generally a substantially disk-shaped member, and is a portion that transmits deformation (input) of the strain unit 220 to the sensor chip 100. Any of the portions of the input transmission unit 230 does not deform in response to force or moment received.

The input transmission unit 230 includes: an outer frame portion 231 in a substantially ring-shape in the plan view; an inner frame portion 232 in a substantially ring-shape in the plan view that is provided next to the inner circumference of the outer frame portion 231; and a containment portion 235 provided on the inner side of the inner frame portion 232. The external diameter of the outer frame portion 231 is, for example, about 50 mm. In the plan view, the input transmission unit 230 is fourfold symmetric about the center of the outer frame portion 231.

The inner frame portion 232 is formed to be thinner than the outer frame portion 231. The upper surface of the inner frame portion 232 is at a position lower than the upper surface of the outer frame portion 231. The lower surface of the inner frame portion 232 is at a position higher than the lower surface of the outer frame portion 231.

The containment portion 235 includes four horizontal support portions 235a, four vertical support portions 235b, and four sensor connection portions 235c, and is capable of containing the sensor chip 100. One of the horizontal support portions 235a, one of the vertical support portions 235b, and one of the sensor connection portions 235c constitute a single bent beam structure. Specifically, the containment portion 235 includes four beam structures.

The horizontal support portions 235a are arranged with regular intervals on the inner surface of the inner frame portion 232 in the plan view, and extend in the horizontal direction from the inner surface of the inner frame portion 232. The thickness of the horizontal support portions 235a is substantially the same as the thickness of the inner frame portion 232.

Each of the vertical support portion 235b extends vertically from the inner circumferential edge of the corresponding horizontal support portion 235a to the side of the strain unit 220. Any of the upper surface and the lower surface of each of the vertical support portions 235b is at a position lower than the lower surface of the outer frame portion 231. The vertical support portions 235b are substantially constant in the thickness and the width.

Each of the sensor connection portions 235c extends from the lower end of the corresponding vertical support portion 235b to the central side of the inner frame portion 232 in the horizontal direction. In the plan view, the longitudinal direction of each of the sensor connection portions 235c matches the longitudinal direction of the corresponding horizontal support portion 235a. The width of each of the horizontal support portions 235a and the width of each of the sensor connection portions 235c gradually decrease toward the central side of the inner frame portion 232 in the plan view.

The sensor connection portions 235c are arranged in a substantially cross shape in the plan view, but the inner circumferential edges of the sensor connection portions 235c are spaced apart from each other without crossing each other. When virtual extension lines extended from the sensor connection portions 235c to the central side of the inner frame portion 232 are considered in the plan view, the extension lines cross at the center of the inner frame portion 232. The inner circumferential edge sides on the upper surfaces of the sensor connection portions 235c are portions that are connected to the force application points 151 to 154 of the sensor chip 100.

A distance in the vertical direction from the upper surface of the horizontal support portion 235a to the upper surface of the sensor connection portion 235c as illustrated in Fig. 19 is referred to as a depth D of the containment portion 235. The depth D of the containment portion 235 is, for example, about 2 mm to 10 mm.

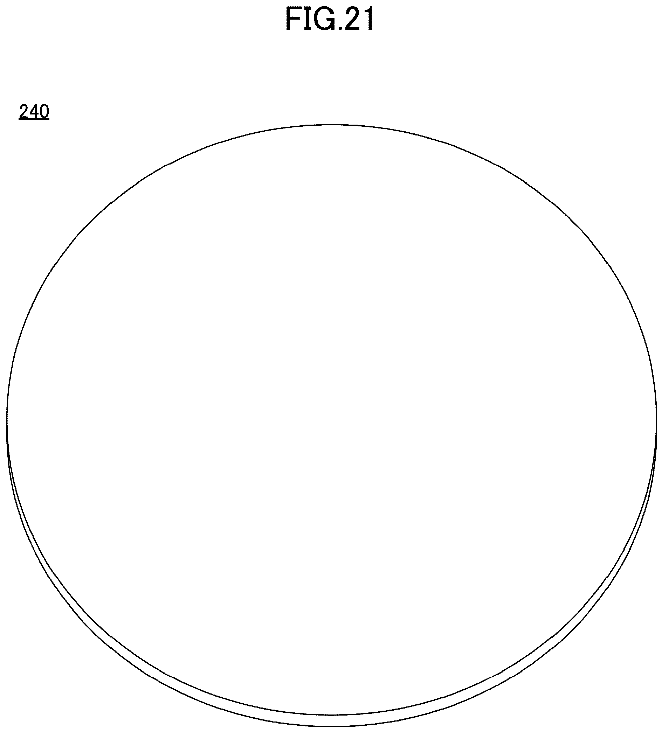

Fig. 21 is a perspective view illustrating an example of a lid plate constituting the strain body. As illustrated in Fig. 21, the lid plate 240 is generally a substantially disk-shaped member, and is a member protecting internal components (the sensor chip 100 and the like). The lid plate 240 is formed to be thinner than the force-receiving plate 210, the strain unit 220, and the input transmission unit 230.

For example, a hard metal material such as stainless steel (SUS) can be used as the materials of the force-receiving plate 210, the strain unit 220, the input transmission unit 230, and the lid plate 240. Among them, it is particularly preferable to use SUS630, which is hard and has high mechanical strength. Among the members that constitute the strain body 200, it is particularly desirable that the force-receiving plate 210, the strain unit 220, and the input transmission unit 230 are firmly connected or made into an integrated structure. Fastening with screws, welding, and the like man be considered as a connection method between the force-receiving plate 210, the strain unit 220, and the input transmission unit 230, but no matter which of these methods is used, it is required to sufficiently withstand the force and moment that are input to the strain body 200.

In the present embodiment, for example, the force-receiving plate 210, the strain unit 220, and the input transmission unit 230 are manufactured by metal powder injection molding, and are collectively sintered again to be diffusion-bonded. The force-receiving plate 210, the strain unit 220, and the input transmission unit 230 that are diffusion-bonded can achieve a necessary and sufficient bonding strength. After the sensor chip 100 and other internal components are mounted, the lid plate 240 may be fastened to the input transmission unit 230 with screws, for example.

In the strain body 200, when a force or a moment is applied to the force-receiving plate 210, the force or the moment is transmitted to the central portion 222 of the strain unit 220 connected to the force-receiving plate 210, and deformation occurs at the four beam structures 223 according to the input. At this time, the outer frame portion 221 of the strain unit 220 and the input transmission unit 230 do not deform.

Specifically, in the strain body 200, the force-receiving plate 210 and the central portion 222 and the beam structure 223 of the strain unit 220 are movable units that deform in response to a force or a moment in a predetermined axial direction, and the outer frame portion 221 of the strain unit 220 is a non-movable unit that does not deform in response to a force or a moment. The input transmission unit 230 bonded to the outer frame portion 221 of the strain unit 220 that is the non-movable unit is a non-movable unit that does not deform in response to a force or a moment, and the lid plate 240 bonded to the input transmission unit 230 is also a non-movable unit that does not deform in response to a force or a moment.

In a case where the strain body 200 is used in the force sensor apparatus 1, the support portions 101 to 104 of the sensor chip 100 are connected to the first connection portions 224a provided in the central portion 222 that is the movable unit, and the support portion 105 of the sensor chip 100 is connected to the second connection portion 224b. The force application points 151 to 154 of the sensor chip 100 are connected to the inner circumferential edge side on the upper surfaces of the sensor connection portions 235c provided in the containment portion 235 that is the non-movable unit. Therefore, the sensor chip 100 operates such that the detection beams deform through the support portions 101 to 105, without moving the force application points 151 to 154.

Alternatively, the force application points 151 to 154 of the sensor chip 100 may be connected to the first connection portions 224a provided in the central portion 222 that is the movable unit, and the support portions 101 to 105 may be connected to the inner circumferential edge sides on the upper surfaces of the sensor connection portions 235c provided in the containment portion 235 that is the non-movable unit.

Specifically, the sensor chip 100 that can be contained in the containment portion 235 includes the support portions 101 to 105 and the force application points 151 to 154 of which positions change relatively with respect to one another in response to a force or a moment. Further, in the strain body 200, the central portion 222 that is the movable unit includes: the first connection portions 224a extending to the side of the input transmission unit 230 to be connected to any one of the support portions 101 to 105 or the force application points 151 to 154; and the second connection portion 224b. Also, the containment portion 235 includes the sensor connection portions 235c connected to the other of the support portions 101 to 105 and the force application points 151 to 154.

In this manner, the strain body 200 converts the input force or moment into displacement, and transmits the displacement to the mounted sensor chip 100. In a conventional strain body that is intended to achieve substantially the same function, a structure for receiving a force or a moment and a structure for transmitting displacement are configured to be integrated or in close contact. Therefore, the displacement and the load limit are appreciably in a trade-off relationship, and in particular, it used to be difficult to secure a large load limit.

In the strain body 200, the strain unit 220 receiving a force or a moment and the input transmission unit 230 transmitting displacement to the sensor chip 100 are provided as separate structure bodies, and therefore, both of a high load limit and displacement can be achieved.

### (Amplifier)

Because the sensor chip 100 is designed to attain a high load limit (for example, about 500 N), the sensor chip 100 has a certain size. As described above, the planar shape of the sensor chip 100 is, for example, a square having a side of about 7000 µm. In this manner, when the size of the sensor chip 100 increases to a certain level, the redundant areas increase accordingly.

In this case, the redundant areas are areas arranged at positions different from the areas where the piezo resistance elements are provided, i.e., areas other than the detection blocks. In the sensor chip 100, the redundant areas account for about 50% of the upper surface. Therefore, it is preferable to effectively make use of the redundant areas. Accordingly, in the sensor chip 100, multiple amplifiers (which may also be referred to as AMPs) for amplifying the outputs of the piezo resistance elements of respective axes are provided in the redundant areas. Specifically, in the sensor chip 100, the areas including the detection blocks for detecting a force or a moment and the areas including the amplifiers are completely separated.

In the sensor chip 100, the support portions 101 to 105 are the redundant areas. The five redundant areas, i.e., the support portions 101 to 105, have an upper surface having substantially the same size of area as one another. As described above, the planar shapes of the support portions 101 to 105 are, for example, a square having a side of about 2000 µm. As described above, the support portions 101 to 105 can be formed by, for example, an active layer, a BOX layer, and a support layer of a SOI substrate, and a thickness of each of the layers may be, for example, about 400 µm to 600 µm.

In this manner, the sizes of areas of the upper surfaces of the support portions 101 to 105 are relatively large, and accordingly, the support portions 101 to 105 have a high degree of rigidity. Also, the support portions 101 to 105 are connected to the non-movable unit of the strain body 200, and therefore, even when a force or a moment is applied to the force sensor apparatus 1, the occurring stress is extremely low. In view of the influence on the characteristics of the amplifiers, the amplifiers are preferably provided in the areas where the occurring stress is low, and therefore, the support portions 101 to 105 are suitable as the areas in which the amplifiers are provided.

In the sensor chip 100, six amplifiers for amplifying the outputs of the piezo resistance elements of six axes are provided in the redundant areas. For example, three of the six amplifiers are provided in one of the support portions 101 to 104, and the other three of the six amplifiers are provided in one of the other three support portions.

The sensor chip 100 may detect, with respect to multiple axes (i.e., perform detection with respect to two or more axes), a force or a moment in a predetermined axial direction. Specifically, the sensor chip 100 may be a sensor chip with two-axis detection or a sensor chip with three-axis detection. In this case, the sensor chip 100 may be provided with amplifiers for multiple axes that amplify the outputs of the piezo resistance elements of multiple axes. At least one of the multiple amplifiers for the multiple axes is provided in one of the support portions 101 to 104, and at least another of the multiple amplifiers for the multiple axes is provided in one of the other three support portions. Hereinafter, a case where the sensor chip 100 is provided with six amplifiers for amplifying the outputs of the piezo resistance elements of six axes is explained.

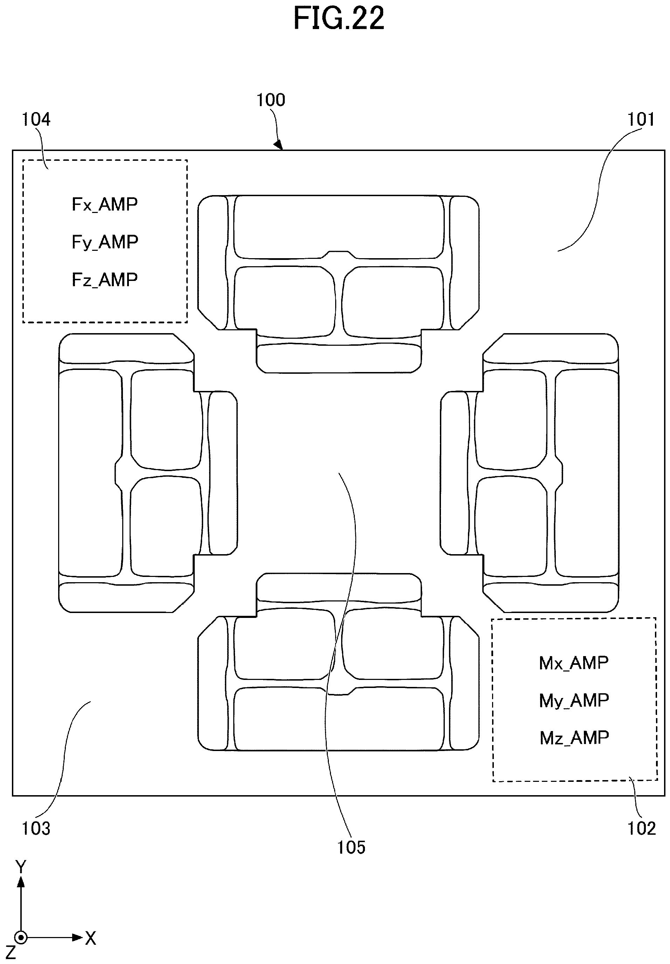

As illustrated in Fig. 22, in the sensor chip 100, Fx_AMP that is an amplifier for an Fx signal, Fy_AMP that is an amplifier for an Fy signal, and Fz_AMP that is an amplifier for an Fz signal are provided in the support portion 104. Mx AMP that is an amplifier for an Mx signal, My_AMP that is an amplifier for an My signal, and Mz AMP that is an amplifier for an Mz signal are provided in the support portion 102. Fx_AMP, Fy_AMP, Fz_AMP, Mx_AMP, My_AMP, and Mz_AMP are not made by mounting previously prepared ICs on the support portions, but are integrally formed with respective support portions by a semiconductor process.

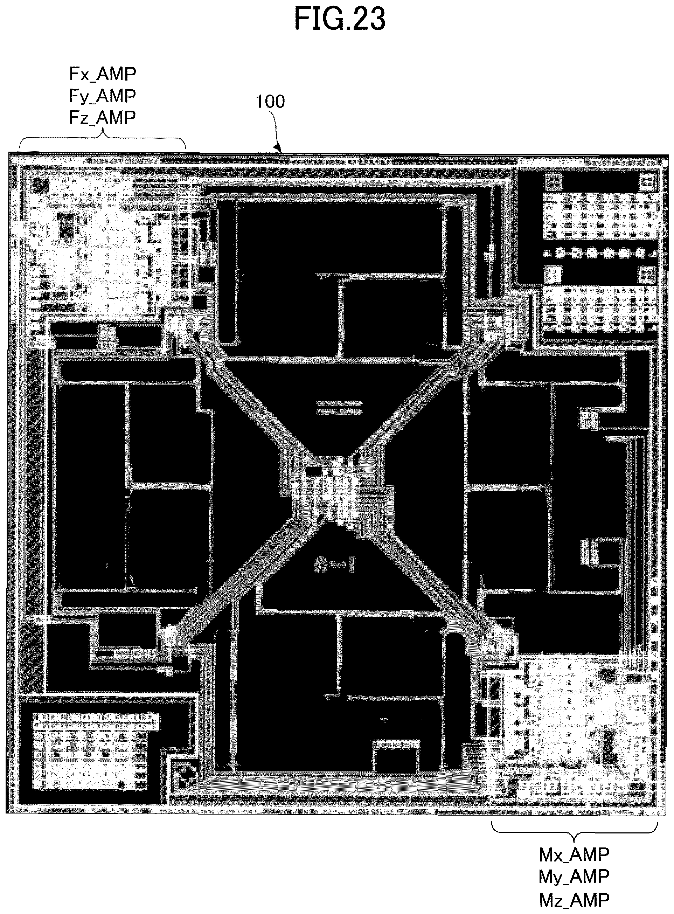

Fig. 23 is a plan view schematically illustrating wires connected to the piezo resistance elements and the amplifiers. As illustrated in Fig. 23, the wires connected to the piezo resistance elements and the amplifiers are provided in the support portions, the frame portions, the coupling portions, and the detection beam. The redundant areas in which the amplifiers are provided may be freely determined in view of the arrangement of the wires, the ease of wire bonding, and the like. In Fig. 22, the amplifiers are provided in the support portions 102 and 104. Alternatively, for example, the amplifiers may be provided in the support portions 102 and 103.

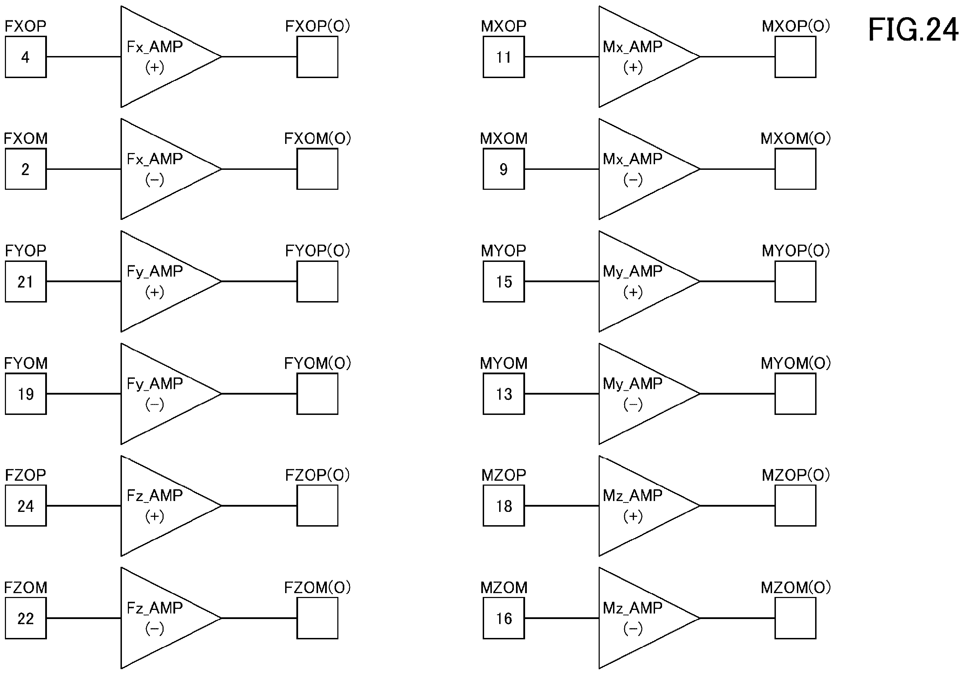

Fig. 24 is a drawing illustrating connections between the amplifiers. As illustrated in Fig. 24, a positive terminal and a negative terminal of each bridge circuit illustrated in Fig. 12 and Fig. 13 are connected to each amplifier, and the signals are amplified and output by the amplifiers. For example, an Fx axis output positive terminal (4) of the bridge circuit as illustrated in Fig. 12 is input to Fx AMP (+) to be amplified by Fx_AMP (+) and output as FXOP(O). An Fx axis output negative terminal (2) of the bridge circuit as illustrated in Fig. 12 is input to Fx_AMP (-) to be amplified by Fx_AMP (-) and output as FXOM(O). FXOP(O) and FXOM(O) constitute a differential output of the Fx axis amplified by the amplifier. Likewise, with respect to Fy axis, Fz axis, Mx axis, My axis, and Mz axis, the positive terminal and the negative terminal of each bridge circuit as illustrated in Fig. 12 and Fig. 13 are input to a corresponding amplifier to be amplified by the amplifier and output as a differential output.

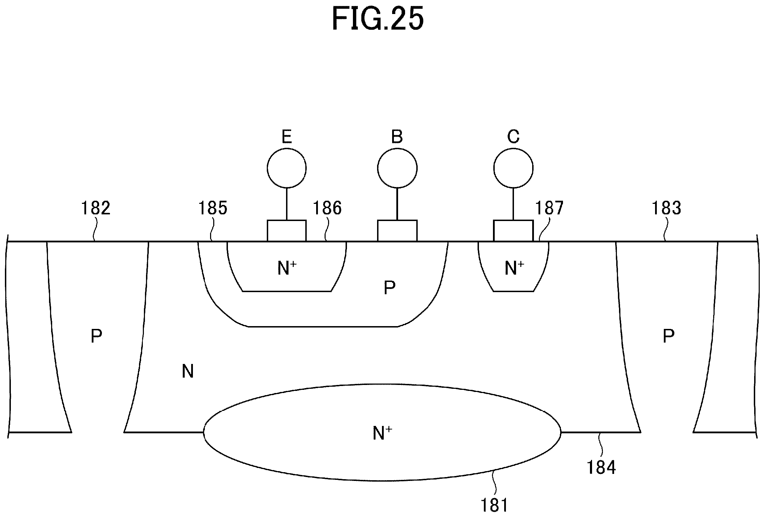

Each of the amplifiers is, for example, a semiconductor device in which multiple bipolar transistors are arranged next to each other. Fig. 25 is a cross-sectional view illustrating an example of transistors constituting each amplifier, and illustrates an example of an NPN-type bipolar transistor. In Fig. 25, the NPN-type bipolar transistor includes an N+ layer 186, a P layer 185, and an N+ layer 187. Numeral 181 denotes a buried layer of N+, numerals 182 and 183 denote isolation layers, and a numeral 184 denotes an N-type epitaxial layer. Reference symbols E, B, and C denote an emitter terminal, a base terminal, and a collector terminal, respectively.

In this manner, amplifiers for amplifying the outputs of the piezo resistance elements are formed, by a semiconductor process, in the redundant areas of the sensor chip 100, so that the output of the sensor chip 100 can be increased, and accordingly the sensitivity can be improved. Specifically, the sensor chip 100 that achieves both of the load limit and the sensitivity can be implemented as a single chip that is formed by only the semiconductor process.

Furthermore, because the amplifiers are formed in the redundant areas of the sensor chip 100, the amplifiers can be mounted without increasing the size of the sensor chip 100, i.e., with the same chip size as a chip size of a semiconductor chip on which amplifiers are not mounted.

Furthermore, although the sensor chip 100 of multi-axis detection requires amplifiers for the number of axes (for example, for six axes), the amplifiers are integrated on a single chip, so that increase in the number of components and the assembly cost can be alleviated and accordingly, the price can be reduced. Specifically, although the amplifiers can be prepared externally, in such a case, the price is likely to increase due to the increase in the number of components and the assembly cost. When the amplifiers are integrated as in the sensor chip 100, the increase in the price can be alleviated.

Furthermore, because the amplifiers are integrated with the sensor chip, a protection device for ESD (electro-static discharge) such as a diode can be provided at the terminal of the amplifier, and accordingly, the chip withstand voltage can be increased.

In order to achieve a high load limit (for example, about 500 N), the sensor chip 100 has a large chip size, and accordingly has large redundant areas. Therefore, the sensor chip 100 is suitable for integration of the amplifiers. Furthermore, in order to achieve a high load limit (for example, about 500 N), the sensor chip 100 would otherwise tend to decrease in the sensitivity that is in a tradeoff relationship with the load limit, and therefore, the improvement of the sensitivity by the integration of the amplifiers is extremely effective.

### <First modified embodiment of first embodiment>

In a sensor chip 100A according to the first modified embodiment of the first embodiment, not only amplifiers but also other devices are provided in the redundant areas. In the first modified embodiment of the first embodiment, explanation about the same constituent elements as the already explained constituent elements may be omitted.

As described above, in the sensor chip 100, the support portions 101 to 105 are the redundant areas. Even when three amplifiers for force (F)-related signals are provided in the support portion 104, and three amplifiers for moment (M)-related signals are provided in the support portion 102 as in the first embodiment, semiconductor devices having other functions can be provided in the support portions 101, 103, and 105.

In the sensor chip 100A, three analog-to-digital (AD) convertors for converting analog signals amplified by the three amplifiers into digital signals are provided in one of the two support portions, in which the amplifiers are not provided, of the support portions 101 to 104, and the three AD convertors are integrally formed with the support portion. Furthermore, another three AD convertors for converting analog signals amplified by the other three amplifiers into digital signals are provided in the other of the two support portions, in which the amplifiers are not provided, of the support portions 101 to 104, and the three AD convertors are integrally formed with the support portion.

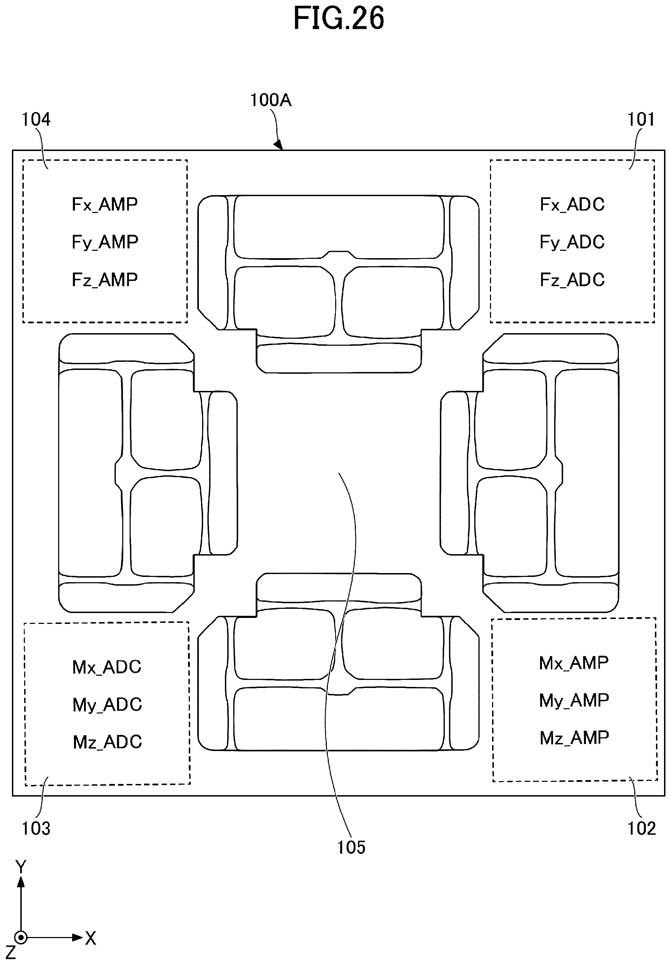

Specifically, as illustrated in Fig. 26, in the sensor chip 100A, the three amplifiers for the force (F)-related signals are provided in the support portion 104, the three amplifiers for the moment (M)-related signals are provided in the support portion 102, the three AD convertors for the force (F)-related signals are provided in the support portion 101, and the three AD convertors for the moment (M)-related signals are provided in the support portion 103. It should be noted that the AD convertor is a semiconductor device that is connected to the output side of the amplifier and that converts the analog output amplified by the amplifier to the digital output.

In the sensor chip 100A, Fx_ADC that is an AD convertor for the Fx signal, Fy_ADC that is an AD convertor for the Fy signal, and Fz_ADC that is an AD convertor for the Fz signal are provided in the support portion 101. Also, Mx_ADC that is an AD convertor for the Mx signal, My_ADC that is an AD convertor for the My signal, and Mz_ADC that is an AD convertor for the Mz signal are provided in the support portion 103. Fx_ADC, Fy_ADC, Fz_ADC, Mx_ADC, My_ADC, and Mz_ADC are not made by mounting previously prepared ICs on the support portions, but are integrally formed with respective support portions by a semiconductor process.

In this manner, not only the amplifiers but also the AD convertors are integrated in some or all of the five redundant areas of the sensor chip 100A, so that the digital output can be supported. Specifically, the output of the bridge circuit is amplified by the amplifier, and further, the analog output of the amplifier is converted by the AD convertor into the digital output. Thus the digital output can be output to the outside of the sensor chip 100A. The redundant areas in which the amplifiers and the AD convertors are provided may be freely determined in view of the arrangement of the wires, the ease of wire bonding, and the like.

Although the preferred embodiment has been described in detail above, the present invention is not limited to the above-described embodiment, and various changes and replacements can be made with respect to the above-described embodiment without departing from the subject matters described in claims.

## Claims

1. A sensor chip for detecting, with respect to multiple axes, a force or a moment in a predetermined axial direction, based on a change in outputs of strain detection elements,
the sensor chip comprising:
a plurality of first support portions,
wherein a plurality of amplifiers configured to amplify the outputs of the strain detection elements of respective axes are provided in the plurality of first support portions and integrally formed with the plurality of first support portions.

2. The sensor chip according to claim 1, wherein a planar shape of the sensor chip is a rectangle,
the plurality of first support portions include four first support portions that are provided at four corners of the rectangle,
the plurality of amplifiers include amplifiers for multiple axes that amplify the outputs of the strain detection elements of the respective axes,
at least one of the plurality of amplifiers is provided in one of the four first support portions, and
at least another of the plurality of amplifiers is provided in one of three other first support portions of the four first support portions.

3. The sensor chip according to claim 1, wherein a planar shape of the sensor chip is a rectangle,
the plurality of first support portions include four first support portions that are provided at four corners of the rectangle,
the plurality of amplifiers include six amplifiers for six axes that amplify the outputs of the strain detection elements of six axes,
three of the six amplifiers are provided in one of the four first support portions, and
another three of the six amplifiers are provided in one of three other first support portions of the four first support portions.

4. The sensor chip according to claim 3, wherein three AD convertors configured to convert analog signals amplified by the three of the six amplifiers into digital signals are provided in one of two first support portions of the four first support portions in which none of the six amplifiers is provided, such that the three AD convertors are integrally formed with the one of the two first support portions, and
three other AD convertors configured to convert analog signals amplified by the another three of the six amplifiers into digital signals are provided in another of the two first support portions of the four first support portion in which none of the six amplifiers is provided, such that the three other AD convertors are integrally formed with the another of the two first support portions.

5. The sensor chip according to any one of claims 2 to 4, wherein the four first support portions are redundant areas that are provided at positions different from areas where the strain detection elements are provided.

6. The sensor chip according to claim 5, further comprising:
a second support portion provided in a center of the rectangle,
wherein the second support portion is a redundant area that is provided at a position different from the areas where the strain detection elements are provided.

7. The sensor chip according to claim 6, further comprising:
frame portions connecting neighboring first support portions of the four first support portions;
coupling portions connecting the second support portion and the four first support portions; and
beams provided with the strain detection elements, each of the beams being located in an area enclosed by the neighboring first support portions of the four first support portions, a frame portion of the frame portions and coupling portions of the coupling portion that are connected to the neighboring first support portions, and the second support portion,
wherein wires connected to the strain detection elements and the amplifiers are provided in the first support portions, the second support portion, the frame portions, the coupling portions, and the beams.

8. The sensor chip according to claim 7, wherein the beams provided with the strain detection elements have a T-shaped beam structure.

9. A force sensor apparatus comprising:
the sensor chip according to any one of claims 1 to 8; and
a strain body configured to transmit a force or a moment applied to the strain body, or both of the force and the moment, to the sensor chip.

10. The force sensor apparatus according to claim 9, wherein the plurality of first support portions are connected to a non-movable unit of the strain body.
